# EUROPÄISCHE PATENTSCHRIFT

(11) **EP 4 483 190 B1**
(45) Veröffentlichungstag und Bekanntmachung des Hinweises auf die Patenterteilung: **01.04.2026**
(21) Anmeldenummer: 23704105.8
(22) Anmeldetag: 07.02.2023
(51) Int. Cl.: G01N 35/10

(54) **FLÜSSIGKEITSTRANSFER ZWISCHEN ROTIERENDEN MODULEN**
TRANSFER OF FLUID BETWEEN ROTATING MODULES
TRANSFERT DE FLUIDE ENTRE MODULES ROTATIFS

(30) Priorität: 24.02.2022 DE 102022201938
(43) Veröffentlichungstag der Anmeldung: 01.01.2025
(73) Patentinhaber: Hahn-Schickard-Gesellschaft für angewandte Forschung e.V., 78052 Villingen-Schwenningen (DE)
(72) Erfinder: JÜLG, Peter, 79102 Freiburg (DE); KAKU, Yumi, 79114 Freiburg (DE); BÖSENBERG, Moritz, 79108 Freiburg (DE); PAUST, Nils, 79115 Freiburg (DE); HUTZENLAUB, Tobias, 77955 Ettenheim (DE); LÜDDECKE, Jan, 79395 Neuenburg am Rhein (DE)
(74) Vertreter: Stöckeler, Ferdinand
(86) Internationale Anmeldenummer: PCT/EP2023/052953
(87) Internationale Veröffentlichungsnummer: WO 2023/161012

(56) Entgegenhaltungen:
- IT-A1- 201800 000 968
- US-B1- 6 338 820
- US-B1- 6 742 549

## Beschreibung

Die vorliegende Erfindung betrifft Vorrichtungen und Verfahren zum Transferieren von Flüssigkeit zwischen Modulen, während die Module jeweils derart um eine Drehachse rotieren, dass sich eine Fluidöffnung des Fluidikmoduls entlang einer Kreisbahn um die Drehachse bewegt und sich eine Transferöffnung des Transfermoduls ebenfalls entlang einer Kreisbahn um die Drehachse bewegt.

Die zentrifugale Mikrofluidik beschäftigt sich mit der Handhabung von Flüssigkeiten im Pikoliter- bis Milliliter-Bereich in rotierenden Systemen. Solche Systeme sind meist Polymer-Einwegkartuschen, die in oder anstelle von Zentrifugenrotoren verwendet werden, mit der Absicht, Laborprozesse zu automatisieren. Dabei können Standardlaborprozesse, wie Pipettieren, Zentrifugieren, Mischen oder Aliquotieren in einer mikrofluidischen Kartusche implementiert werden. Zu diesem Zweck beinhalten die Kartuschen Kanälen für die Fluidführung, sowie Kammern für das Auffangen von Flüssigkeiten. Allgemein können solche Strukturen, die zur Handhabung von Fluiden ausgelegt sind, als Fluidikstrukturen bezeichnet werden. Allgemein können solche Kartuschen als Fluidikmodule bezeichnet werden.

Neue Anwendungsfelder, wie z. B. Flüssigbiopsien oder Prozessüberwachungen, können größere Probenvolumina als bisher erfordern, wobei in der Regel benötigte Reagenzien mit dem Probenvolumen mitskalieren. Mikrofluidische Plattformen bzw. Kartuschen können dabei an Durchsatz- bzw. Kapazitätsgrenzen stoßen. So sind zentrifugal-mikrofluidische Plattformen bekannt, auf denen Proben von maximal einigen wenigen 100 µl verarbeitet werden können. Solche mikrofluidischen Kartuschen sind beispielsweise bei O. Strohmeier et al., Chem. Soc. Rev. 44, 6187 (2015) beschrieben. Für neuartige Anwendungen, wie z.B. Methylierungsmusteranalysen in zellfreier DNA mittels Seqenzieren (cfMeDIP-seq Verfahren, siehe S. Y. Shen et al., Nat. Protoc. 7, 617-636 (2012)) steigt zudem aufgrund der Komplexität der Verfahren die Anzahl an Reagenzien. Diese lassen sich auf typischen mikrofluidischen Plattformen bzw. Kartuschen nicht realisieren. Ferner müssen manche Reagenzien frisch angesetzt werden und können deshalb nicht in der mikrofluidischen Kartusche vorgelagert werden. Ferner haben viele der benötigten Reagenzien benetzende Eigenschaften und es kann somit vorkommen, dass die Flüssigkeiten bereits unmittelbar nach dem Einpipettieren durch Kapillarkräfte im System verteilt werden und somit Probleme im anschließenden mikrofluidischen Protokoll verursachen (z.B. durch Verschließen von Entlüftungen oder Befüllen von Transfer-Siphons).

Aus dem Stand der Technik sind prinzipiell einige Systeme bekannt, um zentrifugal-mikrofluidische Kartuschen oder vergleichbare Testträger im Stillstand zu befüllen. Dadurch wird Flüssigkeit durch einen ebenso im Stillstand befindlichen Dispenser in eine Fluidöffnung der Kartusche abgegeben, wobei anschließend die zentrifugal-mikrofluidische Kartusche rotiert wird, um diese Flüssigkeit in irgendeiner Form zu verwenden. Beispielsweise kann hier auf J. Steigert et al., "Direct hemoglobin measurement on a centrifugal microfluidic platform for point-of-care diagnostics", Sensors and Actuators, A: PHYSICAL 130-131, Seiten 228-233, 2006, verwiesen werden. Ein ähnliches Verfahren wird auch in der US 2022/0008924 A1 beschrieben.

Ferner sind im Stand der Technik bereits Systeme bekannt, um zentrifugal-mikrofluidische Kartuschen unter Rotation der zentrifugal-mikrofluidischen Kartusche zu befüllen. Bei solchen Systemen befindet sich der Dispenser an einer festen Position. So offenbaren M. Karle et al., "Axial Centrifugal Filtration - A Novel Approach for Rapid Bacterial Concentration from a Large Volume", Transducers and Eurosensors XXVII, The 17th International Conference on Solid-State Sensors, Actuators and Microsystems, Seiten 1235-1238, IEEE, Piscataway, NJ, 2013, ein Verfahren, bei dem Flüssigkeit in einen sich auf einem Rotationszentrum befindlichen Einlass gegeben wird, während sich der Dispenser an einer festen Position befindet. Ein ähnliches Verfahren ist auch bei A. P. Bouchard et al., "Non-contact Addition, Metering, and Distribution of Liquids into Centrifugal Microfluidic Devices in Motion", Analytical Chemistry 82, Seiten 8386-8389, 2010, beschrieben, wobei ein kontinuierlicher Flüssigkeitsstrom in eine mittig angeordnete Einlassöffnung einer rotierenden Plattform eingebracht wird. Ein ähnliches Verfahren wird auch in der US 2022/0008924 A1 beschrieben. Bei S. Haeberle et al., "Centrifugal Micromixer", Chem. Eng. Technol. 28, Seiten 613-616, 2005, ist ein Verfahren beschrieben, bei dem mehrere ringförmige Einlasskammern auf einer rotierenden Plattform angeordnet sind, die durch einen quasi-kontinuierlichen Flüssigkeitsstrom während einer Drehung befüllt werden.

Aus der US 7 935 522 B2 sind Vorrichtungen und Verfahren bekannt, bei denen eine Flüssigkeitszugabe über eine piezoelektrische Abgabevorrichtung vorgesehen ist, wobei die Abgabe von Flüssigkeitstropfen aus der Vorrichtung mit der Drehgeschwindigkeit der Scheibe synchronisiert ist. Die DE 10 2016 213 000 A1 offenbart eine zentrifugal-mikrofluidische Kartusche, bei der ein Beladen von Ladefluidikstrukturen mit einer Probe im Stillstand oder Rotation beispielsweise durch Einlegen, Eintropfen oder Einpipettieren geschehen kann.

Verfahren und Vorrichtungen, bei denen Flüssigkeit bzw. Flüssigkeitstropen von einer Abgabeeinheit zu einer Empfangseinheit transferiert werden, die einer gemeinsamen Rotation unterzogen sind, sind beispielsweise aus der EP 3 815 788 A1, der US 2003/0 032 071 A1, der US 2014/0 106 395 A1, der US 2015/0 196 907 A1, der US 2019/0 293 598 A1 und der US 2015/0 273 469 A1 bekannt.

Weiterhin ist aus US 6 742 549 B1 eine Vorrichtung mit koaxialen Modulen zum Fluidtransfer bekannt.

Bei neuen Anwendungsfeldern, beispielsweise der Flüssigbiopsie können Proben von 1 ml oder mehr erforderlich sein, wobei es vorteilhaft wäre, Proben kontinuierlich während Vorbereitungsschritten oder einer Analyse zuführen zu können.

Die der vorliegenden Erfindung zugrundeliegende Aufgabe besteht darin, Vorrichtungen und Verfahren zu schaffen, die es ermöglichen, auch größere Probenvolumina und/oder eine größere Anzahl von Reagenzien und/oder stark benetzende Flüssigkeiten während einer Probenvorbereitung oder Probenanalyse zwischen einem Fluidikmodul und einem Transfermodul auf flexible Weise transferieren zu können.

Diese Aufgabe wird durch eine Vorrichtung zum Transferieren von Flüssigkeit zwischen um eine Drehachse rotierenden Modulen nach Anspruch 1 und ein Verfahren zum Transferieren von Flüssigkeit zwischen um eine Drehachse rotierenden Modulen nach Anspruch 10 gelöst. Weiterbildungen der vorliegenden Erfindung sind in den abhängigen Ansprüchen dargelegt.

Beispiele der vorliegenden Erfindung schaffen eine Vorrichtung zum Transferieren von Flüssigkeit zwischen um eine Drehachse rotierenden Modulen, die folgende Merkmale aufweist:
ein Fluidikmodul, das eine Fluidöffnung aufweist, die in einer ersten Richtung orientiert ist und mit Fluidikstrukturen in dem Fluidikmodul fluidisch verbunden ist, wobei die erste Richtung einer ersten axialen Richtung bezüglich der Drehachse entspricht oder einen Winkel < 90° zu der ersten axialen Richtung aufweist;
ein Transfermodul, das eine Transferöffnung aufweist, die in einer zweiten Richtung orientiert ist, wobei die zweite Richtung einer zweiten axialen Richtung bezüglich der Drehachse, die entgegengesetzt zu der ersten axialen Richtung ist, entspricht oder einen Winkel < 90° zu der zweiten axialen Richtung aufweist, wobei das Transfermodul ausgelegt ist, um Flüssigkeit durch die Transferöffnung abzugeben oder aufzunehmen;
einen ersten Antrieb, der ausgelegt ist, um eine Drehung des Fluidikmoduls zu bewirken, um die Fluidöffnung entlang einer Kreisbahn um die Drehachse zu bewegen;
einen zweiten Antrieb, der ausgelegt ist, um eine Drehung des Transfermoduls zu bewirken, um die Transferöffnung entlang einer Kreisbahn um die Drehachse zu bewegen; und
eine Steuerung, die ausgelegt ist, um die Drehung des Fluidikmoduls und die Drehung des Transfermoduls zu synchronisieren, um die Fluidöffnung und die Transferöffnung relativ zueinander zu positionieren, um während der Drehungen einen Flüssigkeitstransfer zwischen der Transferöffnung und der Fluidöffnung zu ermöglichen.

Beispiele der vorliegenden Erfindung schaffen ein Verfahren zum Transferieren von Flüssigkeit zwischen um eine Drehachse rotierenden Modulen, mit folgenden Merkmalen:
Bewirken einer Drehung eines Fluidikmoduls, das eine Fluidöffnung aufweist, die in einer ersten Richtung orientiert ist und mit Fluidikstrukturen in dem Fluidikmodul fluidisch verbunden ist, um die Fluidöffnung entlang einer Kreisbahn um die Drehachse zu bewegen, wobei die erste Richtung einer ersten axialen Richtung bezüglich der Drehachse entspricht oder einen Winkel < 90° zu der ersten axialen Richtung aufweist;
Bewirken einer Drehung eines Transfermoduls, das eine Transferöffnung aufweist, die in einer zweiten axialen Richtung bezüglich der Drehachse, die entgegengesetzt zu der ersten axialen Richtung ist, orientiert ist, wobei die zweite Richtung einer zweiten axialen Richtung bezüglich der Drehachse, die entgegengesetzt zu der ersten axialen Richtung ist, entspricht oder einen Winkel < 90° zu der zweiten axialen Richtung aufweist, wobei das Transfermodul ausgelegt ist, um Flüssigkeit durch die Transferöffnung abzugeben oder aufzunehmen, um die Transferöffnung entlang einer Kreisbahn um die Drehachse zu bewegen;
Synchronisieren der Drehung des Fluidikmoduls und der Drehung des Transfermoduls, um die Fluidöffnung und die Transferöffnung relativ zueinander zu positionieren; und
Bewirken eines Flüssigkeitstransfers zwischen der Transferöffnung und der Fluidöffnung während der Drehungen des Fluidikmoduls und des Transfermoduls.

Erfindungsgemäß wird das Fluidikmodul durch einen ersten Antrieb angetrieben und das Transfermodul wird durch einen zweiten Antrieb angetrieben. Der erste Antrieb und der zweite Antrieb sind unabhängig voneinander steuerbar. Um einen Flüssigkeitstransfer während der durch die Antriebe bewirkten Drehungen bzw. Rotationen des Fluidikmoduls und des Transfermoduls zu ermöglichen, werden die Drehungen durch die Steuerung synchronisiert, so dass die Fluidöffnung und die Transferöffnung zueinander positioniert, das heißt ausgerichtet sind, um einen Flüssigkeitstransfer während der Drehungen zwischen denselben zu ermöglichen. Dadurch ist es möglich, auf flexible Weise einen Flüssigkeitstransfer zwischen Fluidikmodul und Transfermodul zu bewirken, während beide Module rotieren, so dass Flüssigkeit in Vorbereitung einer Analyse, während einer Analyse oder nach einer Analyse transferiert werden kann, und zwar während sich die Module drehen, also ohne diese anhalten zu müssen.

Dabei kann bei Beispielen während der Drehung des Fluidikmoduls und der Drehung des Transfermoduls Flüssigkeit durch die Transferöffnung abgegeben oder aufgenommen werden. Das Transfermodul kann dabei ausgelegt sein, um Flüssigkeit aus der Transferöffnung kontinuierlich als Strahl oder diskontinuierlich als Tropfen auszustoßen. Die Fluidöffnung und die Transferöffnung sind dabei aufgrund der Synchronisierung zueinander ausgerichtet, um zu ermöglichen, dass die Flüssigkeit aus der Transferöffnung in die Fluidöffnung gelangt. Bei Beispielen können die Fluidöffnung und die Transferöffnung in azimutaler Richtung bezüglich der Drehachse (isoradial) relativ zueinander positioniert, das heißt versetzt, sein, um einen Versatz der Flugbahn auf der freien Wegstrecke zwischen Transferöffnung und Fluidöffnung zu kompensieren. Bei Beispielen können die Kreisbahn, entlang der sich die Fluidöffnung bewegt, und die Kreisbahn, entlang der sich die Transferöffnung bewegt, einen identischen Radius aufweisen. Bei Ausführungsbeispielen kann die Kreisbahn, entlang der sich die Transferöffnung bewegt, einen etwas geringeren Radius aufweisen als die Kreisbahn, entlang der sich die Fluidöffnung bewegt, um eine zentrifugal bedingte Ablenkung der Flüssigkeit auf der freien Wegstrecke zwischen der Transferöffnung und der Fluidöffnung zu kompensieren. Beispiele der Erfindung können somit ausgelegt sein, um einen sicheren Transfer von Flüssigkeiten zwischen Transferöffnung und Fluidöffnung zu realisieren.

Bei Beispielen kann das Transfermodul eine elektronische Pipette mit einer Pipettenspitze aufweisen, wobei die Transferöffnung an der Pipettenspitze gebildet ist. Beispiele der Erfindung können somit ausgelegt sein, um Flüssigkeit von dem Fluidikmodul zu entnehmen, während sich das Fluidikmodul dreht. Zu diesem Zweck kann bei Beispielen eine Manövriereinrichtung vorgesehen sein, die ausgelegt ist, und während der synchronen Drehung von Fluidikmodul und Transfermodul die Pipettenspitze und/oder das Fluidikmodul in der ersten bzw. zweiten Richtung, beispielsweise in axialer Richtung bezüglich der Drehachse, zu bewegen, um die Pipettenspitze in die Fluidöffnung einzutauchen. Somit kann während der Drehungen Flüssigkeit aus der Fluidöffnung mittels der Pipettenspitze entnommen werden.

Bei Beispielen kann das Fluidikmodul mehrere Fluidöffnungen aufweisen, wobei die Drehung des Fluidikmoduls und die Drehung des Transfermoduls synchronisiert werden können, um nacheinander jeweils eine der mehreren Fluidöffnungen und die Transferöffnung relativ zueinander zu positionieren, um einen Flüssigkeitstransfer zwischen der Transferöffnung und der entsprechenden Fluidöffnung zu ermöglichen. Bei Beispielen kann das Transfermodul mehrere Transferöffnungen aufweisen, wobei die Drehung des Fluidikmoduls und die Drehung des Transfermoduls synchronisiert werden können, um die mehreren Transferöffnungen und mehrere Fluidöffnungen relativ zueinander zu positionieren, um einen Flüssigkeitstransfer zwischen den Transferöffnungen und den Fluidöffnungen zu ermöglichen. Dadurch kann ein Flüssigkeitstransfer zwischen mehreren Fluidöffnungen und der Transferöffnung bewirkt werden. Bei Beispielen ist die radiale Position der Transferöffnung einstellbar, um eine radiale Ausrichtung der Transferöffnung mit der Fluidöffnung zu bewirken, oder um nacheinander eine Ausrichtung der Transferöffnung mit einer jeweiligen von mehreren an unterschiedlichen radialen Positionen angeordneten Fluidöffnungen zu bewirken.

Bei Ausführungsbeispielen ist der erste Antrieb ein Zentrifugenrotor oder ein Drehmotor. Bei Beispielen weist der zweite Antrieb einen Drehmotor, einen Roboterarm mit mehreren Achsen oder ein Linearachsensystem auf. Beispiele der Erfindung ermöglichen somit eine Kombination von Robotik zum Dispensieren von Flüssigkeit während der Durchführung einer Analyse oder eines Probenvorbereitungsschritts und einer zentrifugal-mikrofluidischen Kartusche, auf der eine Prozesskette durchgeführt wird, so dass höhere Probenvolumina verarbeitet werden können. Beispiele der Erfindung sind somit auf eine Kombination von Robotik und Mikrofluidikplattformen gerichtet, die auf vorteilhafte und flexible Weise die Automatisierung von Laborprozessen im Zusammenhang mit biologischen Prozessketten ermöglicht.

Bei Beispielen ist die Steuerung ausgelegt, um den ersten oder zweiten Antrieb zu steuern, um eine Drehung des Fluidikmoduls mit einer Rotationsfrequenz zu bewirken, die der Rotationsfrequenz des Transfermoduls entspricht, oder um eine Drehung des Transfermoduls mit einer Rotationsfrequenz zu bewirken, die der Rotationsfrequenz des Fluidikmoduls entspricht. Dabei kann die Steuerung ausgelegt sein, um einen Winkelversatz zwischen der Fluidöffnung und der Transferöffnung zu erfassen und die Drehung des Fluidikmoduls und/oder des Transfermoduls zu steuern, um den Winkelversatz in einen Toleranzbereich zu bringen. Bei Beispielen kann die Steuerung ausgelegt sein, um den Winkelversatz basierend auf einer Differenz zwischen einer tatsächlichen Position der Fluidöffnung (oder der Transferöffnung) und einer Zielposition zu erfassen, wenn sich die Transferöffnung (oder die Fluidöffnung) an einer bestimmten Position entlang der jeweiligen Kreisbahn befindet. Somit ermöglichen es Beispiele der Erfindung, die Drehungen von Fluidikmodul und Transfermodul auf einfache Weise zu synchronisieren.

Bei Beispielen ist die erste Richtung, in die die Transferöffnung orientiert ist, die erste axiale Richtung bezüglich der Rotationsachse und die zweite Richtung, in die die Fluidöffnung orientiert ist, ist die zur ersten axialen Richtung entgegengesetzte zweite axiale Richtung bezüglich der Rotationsachse. Beispielen können die Transferöffnung(en) und/oder die Fluidöffnung(en) in einer Richtung orientiert sein, die einen Winkel kleiner 90°, kleiner 60°. kleiner 45° oder kleiner 30° bezüglich der Rotationachse aufweist.

### Kurze Beschreibung der Zeichnungen

Ausführungsbeispiele der Erfindung werden nachfolgend bezugnehmend auf die beigefügten Zeichnungen näher erläutert. Es zeigen:
- Fig. 1: eine schematische Darstellung einer Vorrichtung zum Transferieren von Flüssigkeit gemäß einem Beispiel der vorliegenden Erfindung;
- Fig. 2: eine schematische Darstellung eines Beispiels einer Vorrichtung zum Transferieren von Flüssigkeit gemäß der vorliegenden Erfindung;
- Fig. 3: ein Flussdiagramm eines Beispiels eines Verfahrens gemäß der vorliegenden Erfindung;
- Fig. 4: eine schematische Darstellung eines Beispiels eines zweiten Antriebs, der einen Roboterarm, der nach dem sogenannten SCARA-Prinzip arbeitet, aufweist;
- Fig. 5: eine schematische Darstellung eines Beispiels eines zweiten Antriebs, der ein Linearachsensystem aufweist;
- Fig. 6: eine schematische Darstellung eines zweiten Antriebs, der eine Kombination aus Linearachsensystem und Rotationssystem aufweist;
- Fig. 7: ein Flussdiagramm eines Beispiels eines Verfahrens gemäß der vorliegenden Erfindung;
- Fig. 8: ein Flussdiagramm eines Beispiels eines Verfahrens zur Synchronisation der Drehungen; und
- Fig. 9: eine schematische Darstellung eines Winkelversatzes und ein Rotorfrequenzdiagramm zur Erläuterung der Synchronisation von Fig. 8.

### Detaillierte Beschreibung

Im Folgenden werden Beispiele der vorliegenden Offenbarung detailliert und unter Verwendung der beigefügten Zeichnungen beschrieben. Es sei darauf hingewiesen, dass gleiche Elemente oder Elemente, die die gleiche Funktionalität aufweisen, mit gleichen oder ähnlichen Bezugszeichen versehen sind, wobei eine wiederholte Beschreibung von Elementen, die mit den gleichen oder ähnlichen Bezugszeichen versehen sind, typischerweise weggelassen wird. Beschreibungen von Elementen, die gleiche oder ähnliche Bezugszeichen aufweisen, können gegeneinander austauschbar sein. In der folgenden Beschreibung werden viele Details beschrieben, um eine gründlichere Erklärung von Beispielen der Offenbarung zu liefern. Es ist jedoch für Fachleute offensichtlich, dass andere Beispiele ohne diese spezifischen Details implementiert werden können. Merkmale der unterschiedlichen beschriebenen Beispiele können miteinander kombiniert werden, es sei denn Merkmale einer entsprechenden Kombination schließen sich gegenseitig aus oder eine solche Kombination ist ausdrücklich ausgeschlossen.

Beispiele der vorliegenden Erfindung beziehen sich auf Vorrichtungen und Verfahren zur zeitlich und örtlich definierten Bereitstellung von Flüssigkeiten in ein mikrofluidisches Modul unter Rotation. Zu diesem Zweck wird ein Transfermodul, beispielsweise ein System zur Abgabe von Flüssigkeiten, wie z. B. eine elektronische Pipette oder ein Dispenser (z.B. Piezoelektrische Pumpe, Spritzenpumpe, Pneumatische Pumpe oder Peristaltische Pumpe) bzw. dessen Auslass (z.B. eine Düse oder ein Schlauchende), in Rotation versetzt, um Flüssigkeit in ein zweites rotierendes Fluidik-System zu transferieren. Die Abgabe erfolgt dabei unter Synchronisation der Rotationsbewegung beider Systeme, sowohl hinsichtlich Rotationsfrequenz als auch hinsichtlich der radialen und isoradialen Position von Abgabepunkt und Aufnahmepunkt der Flüssigkeit. Der Abgabepunkt kann dabei die Transferöffnung, beispielsweise in einer Pipettenspitze, und der Aufnahmepunkt die Fluidöffnung, beispielsweise ein Einlass in ein Mikrofluidik-Modul, sein. Ziel ist dabei die zeitlich und örtlich definierte Bereitstellung von Flüssigkeiten, beispielsweise von Waschpuffern, welche für die Durchführung von Prozessen, beispielsweise die Aufreinigung einer biologischen Probe, benötigt werden. Auf diese Weise können insbesondere Prozesse mit großen Volumina, sowohl der Probe als auch von Reagenzien, bei geringem Platzbedarf realisiert werden. Im Gegensatz zu bisherigen Verfahren, welche entweder eine Befüllung im Stillstand des Fluidikmoduls vornehmen, mit störenden Kapillarkräften, oder eine getriggerte Tropfen-Abgabe und somit einen geringen Volumenstrom nutzen, können erfindungsgemäß größere Flüssigkeitsmengen sicherer und in kürzerer Zeit in das Fluidikmodul transferiert oder von dem Fluidikmodul entnommen werden. Ein weiterer Vorteil besteht in dem programmierbaren Volumen der Flüssigkeitsabgabe. Neben einem sehr großen Bereich an Volumina vom Mikroliter- bis in den Milliliter-Bereich kann das Volumen in Abhängigkeit des laufenden Prozesses bestimmt und abgegebenen werden, beispielsweise mittels einer optischen Messung einer Konzentration eines durch die Flüssigkeitszugabe erhaltenen Gemischs in dem Fluidikmodul. Beispiele der Erfindung liefern somit die Möglichkeit einer Online-Prozesskontrolle. Bei Beispielen kann das Verfahren auch in umgekehrter Richtung genutzt werden, um Flüssigkeiten aus dem rotierenden Fluidikmodul zu entnehmen, beispielsweise ein durch eine Prozesskette erhaltenes fertiges Produkt. Zusammenfassend liefern Beispiele der Erfindung eine neue Operation, um Fluidikmodule zu beliebigen Zeitpunkten und an beliebigen Orten, in Form von Einlasskammern an unterschiedlichen Positionen auf dem Fluidikmodul, mit beliebigen Volumina einer bzw. mehrerer verschiedener Flüssigkeiten zu versorgen bzw. diese zu entnehmen.

Beispiele der Erfindung ermöglichen es somit, bei bekannten Verfahren auftretende Nachteile zu überwinden. So ist es erfindungsgemäß nicht erforderlich, einen Transfer von Medien in oder aus dem Fluidikmodul im Stillstand durchzuführen, so dass störende Kapillarkräfte erfindungsgemäß eine geringere oder keine Rolle spielen. Bei Beispielen der Erfindung ist keine Funktionalisierung von Oberflächen des Fluidikmoduls, beispielsweise eine Hydrophobisierung, erforderlich. Beispiele der Erfindung erfordern kein Einbringen großer und im Volumen letztendlich trotzdem limitierter Behälter, wie beispielsweise Schlauchbeute, sogenannte Stickpacks. Beispiele der Erfindung ermöglichen große Volumenströme beim Transfer von Flüssigkeiten in das Fluidikmodul, was bei bekannten Verfahren, beispielsweise der diskreten Abgabe von Tropfen unter Verwendung von Trigger-Signalen, nicht möglich ist. Beispiele der Erfindung ermöglichen eine elektronische Programmierung und somit eine Online-Prozesskontrolle, beispielsweise auch unter einer Anpassung der Transfer-Volumina. Im Gegensatz zu bekannten Verfahren sind Beispiele der Erfindung auch zur Entnahme von flüssigen Produkten aus dem Fluidikmodul unter Rotation geeignet.

Bevor Beispiele der vorliegenden Erfindung näher erläutert werden, werden Definitionen einiger hierin verwendeter Begriffe angegeben.

Unter einem rotierenden Modul wird hierin ein Modul verstanden, das eine Kreisbewegung in einer definierten Ebene und um ein definiertes Drehzentrum durchführt. Bei Beispielen kann eine solche Rotation unter Verwendung eines Roboterarms, eines Achsensystems oder eines Drehmotors bewirkt werden.

Unter einem Transfermodul wird hierin eine Vorrichtung zur präzisen und zeitgesteuerten Abgabe bzw. Aufnahme von Flüssigkeiten oder anderen Stoffen und Stoffgemischen verstanden. Beispiele von Vorrichtungen zur präzisen und zeitgesteuerten Abgabe von Flüssigkeiten sind z. B. Dispenser, Pumpen und Pipetten, die beispielsweise an einem Greifer angebracht sein können. Das Transfermodul kann ein rotierendes Modul darstellen oder kann an einem rotierenden Modul abgebracht sein und somit dessen Kreisbewegung folgen. Das Transfermodul transferiert Flüssigkeit, Proben und/oder Reagenzien in das Fluidikmodul und gegebenenfalls Produkte aus dem Fluidikmodul. Bei Beispielen kann das Transfermodul oberhalb des Fluidikmoduls angeordnet sein und somit als oberes rotierendes Modul bezeichnet werden.

Unter einem Fluidikmodul wird hierin eine Vorrichtung zur Durchführung von fluidischen und/oder biochemischen Prozessen unter Rotation verstanden. Dabei kann das Fluidikmodul neben der Fluidöffnung weitere Fluidikstrukturen, wie Kanäle und Kammern, enthalten. Das Fluidikmodul kann dabei Mikrostrukturen und/oder makroskopische Strukturen enthalten. Bei Beispielen kann das Fluidik-Modul in Form eines zentrifugal-mikrofluidischen Chips ausgebildet sein. Bei Beispielen kann das Fluidikmodul makroskopische Strukturen beispielsweise in Form einer Mikrotiterplatte oder in Form von Mikroreaktionsgefäßen aufweisen. Bei Beispielen kann das Fluidikmodul zusätzlich zur Fluidöffnung eine Fluidkammer aufweisen und kann in einem einfachen Fall als ein Mikroreaktionsgefäß ausgebildet sein. Das Fluidikmodul kann ein rotierendes Modul darstellen oder kann mit einem rotierenden Modul verbunden sein und somit dessen Kreisbewegung folgen. Bei Beispielen kann das Fluidikmodul unterhalb des Transfermoduls angeordnet sein und somit als unteres rotierendes Modul bezeichnet werden.

Unter einer Regelung wird hierin ein Verfahren verstanden, das basierend auf Echtzeit-Messdaten die beiden rotierenden Module synchronisiert. Dabei kann sowohl das Transfermodul auf die Bewegung des Fluidikmoduls geregelt werden, als auch umgekehrt, als auch beide gleichzeitig. Eine weitere Funktion der Regelung kann die Ansteuerung des Transfermoduls, sobald sich die Synchronisation der Drehbewegungen in einem vorgegebenen Toleranzfenster befindet, sein.

In diesem Kontext wird als Probe eine Flüssigkeit bzw. ein flüssiges Stoffgemisch bezeichnet, welches innerhalb des Fluidikmoduls vollständig oder teilweise analysiert werden kann oder in diesem für eine folgende Analyse, beispielsweise eine DNA-Extraktion, vorbereitet werden kann. Beispiele solcher Proben sind Blutproben, Wasserproben, Prozessproben, verflüssigte Hautproben, verflüssigte Insektenproben usw. In diesem Kontext werden als Reagenzien alle, insbesondere flüssigen, Stoffe und Stoffgemische bezeichnet, welche zur Analyse oder Vorbereitung der Probe innerhalb des Fluidikmoduls benötigt werden, beispielsweise Waschpuffer, Säuren, Verdünnungen, Nanopartikel und dergleichen. In diesem Kontext wird als Produkt ein Ergebnis oder Zwischenergebnis eines Prozesses in dem rotierenden Fluidikmodul bezeichnet, beispielsweise aufgereinigte DNA.

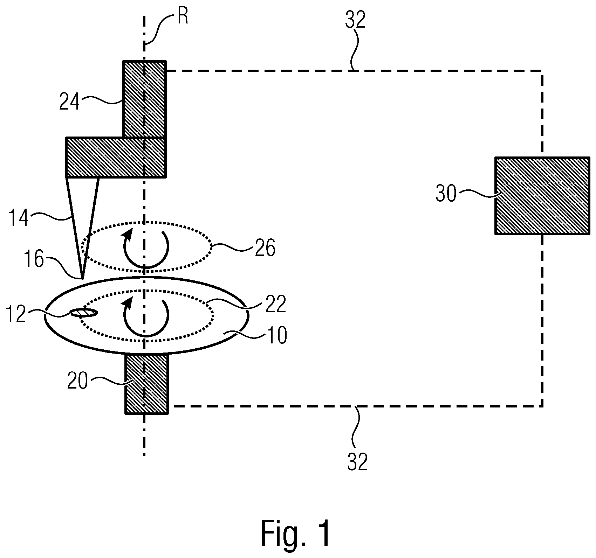

Fig. 1 zeigt schematisch ein Beispiel einer Vorrichtung zum Transferieren von Flüssigkeit zwischen um eine Drehachse rotierenden Modulen. Die Vorrichtung weist ein Fluidikmodul 10 in Form eines Rotationskörpers auf, der hierin auch als Rotor bezeichnet wird. Bei anderen Beispielen kann das Fluidikmodul in einen Rotationskörper einsetzbar sein. Das Fluidikmodul 10 weist eine Fluidöffnung 12 auf, die in einer ersten axialen Richtung bezüglich einer Drehachse R orientiert ist. Die Fluidöffnung 12 ist mit Fluidikstrukturen in dem Fluidik-modul 10, beispielsweise einer oder mehreren Fluidkammern und/oder Fluidkanälen (nicht gezeigt) fluidisch verbunden. Bei dem gezeigten Beispiel ist die erste axiale Richtung bezüglich der Drehachse R nach oben. Die Vorrichtung weist ein Transfermodul 14 auf, das eine Transferöffnung 16 aufweist, die beispielsweise an einem unteren Ende des Transfermoduls 14 gebildet ist. Bei Beispielen kann das Transfermodul 14 durch eine elektronische Pipette gebildet sein, wobei die Transferöffnung 16 durch eine Öffnung an der Pipettenspitze gebildet ist. Die Transferöffnung ist in einer zweiten axialen Richtung bezüglich der Drehachse R orientiert, bei dem gezeigten Beispiel nach unten. Somit sind die Fluidöffnung und die Transferöffnung einander zugewandt.

Die Vorrichtung weist einen ersten Antrieb 20 auf, der ausgelegt ist, um eine Drehbewegung, Rotation, des Fluidikmoduls 10 um die Drehachse R zu bewirken, um die Fluidöffnung 12 entlang einer Kreisbahn 22 um die Drehachse R zu bewegen. Bei Beispielen kann der erste Antrieb 20 durch eine Zentrifuge oder einen Drehmotor, beispielsweise einen Schrittmotor oder einen Servomotor, gebildet sein. Der erste Antrieb 20 kann ausgelegt sein, um eine präzise und zeitgesteuerte Ausführung der Kreisbewegung der Fluidöffnung 12 in einer definierten Ebene senkrecht zu der Drehachse R und um ein definiertes Drehzentrum, die Drehachse R, zu bewirken. Bei Beispielen kann der erste Antrieb an einer Linearachse befestigt sein. Somit kann der erste Antrieb als Manövriereinrichtung dienen, durch die die Fluidöffnung entlang der Drehachse R in Richtung der Transferöffnung verfahren wird. Somit kann durch die elektronische Pipette Flüssigkeit zwischen der Fluidöffnung und der Transferöffnung in Richtung von der Fluidöffnung zu der Transferöffnung transferiert werden.

Die Vorrichtung weist einen zweiten Antrieb 24 auf, der ausgelegt ist, um eine Drehbewegung des Transfermoduls 14 um die Drehachse R zu bewirken, um die Transferöffnung 16 entlang einer Kreisbahn 26 um die Drehachse R zu bewegen. Die Kreisbahn 26 kann den gleichen Radius aufweisen wie die Kreisbahn 22. Bei Beispielen kann der Radius der Kreisbahn 26 etwas kleiner sein als der Radius der Kreisbahn 22, um eine zentrifugal bedingte Ablenkung der Flüssigkeit auf der freien Wegstrecke zwischen der Transferöffnung 16 und der Fluidöffnung 12 zu kompensieren. Bei Beispielen kann der zweite Antrieb 24 durch einen Drehmotor ausgebildet sein, an dessen Rotor das Transfermodul 14 angebracht ist, um die Rotation desselben zu bewirken. Bei Beispielen kann das Transfermodul 14 über ein Trägerelement an dem ersten Antrieb angebracht sein. Der erste Antrieb ist ausgelegt, um eine präzise und zeitgesteuerte Ausführung einer Kreisbewegung in einer definierten Ebene senkrecht zur Drehachse R und um ein definiertes Drehzentrum, die Drehachse R, zu bewirken. Bei Beispielen kann der zweite Antrieb durch einen Drehmotor, einen Roboterarm oder ein Achsensystem gebildet sein.

Die Vorrichtung weist eine Steuerung 30 auf, die ausgelegt ist, um die Drehung des Fluidikmoduls 10 und die Drehung des Transfermoduls 14 zu synchronisieren, um die Fluidöffnung 12 und die Transferöffnung 16 relativ zueinander zu positionieren, um während der Drehungen einen Flüssigkeitstransfer zwischen der Transferöffnung 16 und der Fluidöffnung 12 zu ermöglichen. Die Steuerung kann, wie für Fachleute offensichtlich ist, beispielsweise eine oder mehrere entsprechend programmierte Recheneinrichtungen, einen oder mehrere Mikroprozessoren und/oder eine oder mehrere anwenderspezifische integrierte Schaltungen aufweisen. Bei Beispielen kann die Steuerung verteilt ausgeführt sein, wobei Teile der Steuerung durch einen Computer gebildet sein können und andere Teile der Steuerung durch den jeweiligen Antrieben zugeordnete Mikroprozessoren. Die Steuerung 30 kann ausgelegt sein, um automatisch oder auf manuelle Eingaben durch einen Benutzer hin die hierin beschriebenen Verfahren zu bewirken und die Antriebe entsprechend zu steuern. Zu diesem Zweck ist die Steuerung 30 mit den Antrieben 20, 24 kommunikativ verbunden, wie durch gestrichelte Linien 32 in Fig. 1 gezeigt ist.

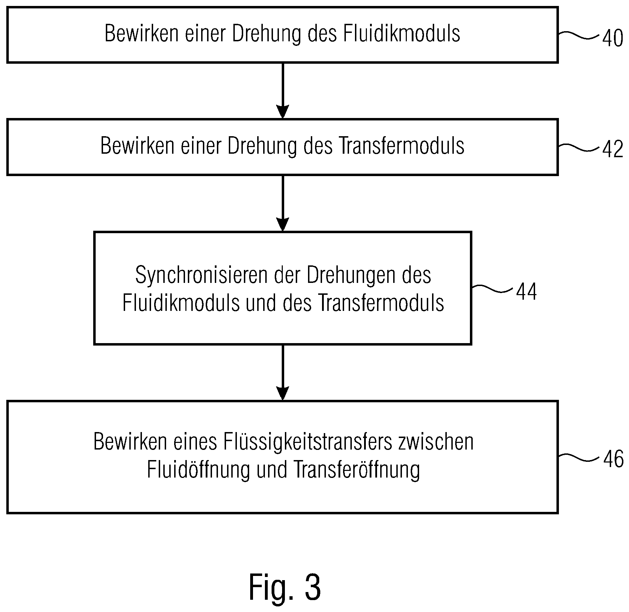

Beispiele der Vorrichtung sind ausgelegt, um ein Verfahren, wie es beispielsweise in Fig. 3 gezeigt ist, durchzuführen. Bei 40 wird eine Drehung des Fluidikmoduls 10 bewirkt, um die Fluidöffnung 12 entlang der Kreisbahn 22 zu bewegen. Bei 42 wird eine Drehung des Transfermoduls 14 bewirkt, um die Transferöffnung entlang der Kreisbahn 26 zu bewegen. Die Drehungen des Fluidikmoduls und des Transfermoduls werden synchronisiert, 44, um die Fluidöffnung und die Transferöffnung relativ zueinander zu positionieren. Sobald die Synchronisation erreicht ist, wird ein Flüssigkeitstransfer zwischen der Fluidöffnung und der Transferöffnung bewirkt, Schritt 46 in Fig. 3.

Bei Beispielen wird zunächst der erste Antrieb 20 gestartet, so dass das Fluidikmodul 10 eine Kreisbewegung ausführt. Der zweite Antrieb wird gestartet, so dass das Transfermodul 14 eine zweite Kreisbewegung ausführt. Unter Einsatz der Steuerung 30 wird dann eine Regelung durchgeführt, durch die die beiden Kreisbewegungen synchronisiert werden, so dass die Transferöffnung des Transfermoduls und die Fluidöffnung des Fluidikmoduls einen definierten Abstand zueinander in allen Raumrichtungen aufweisen und diesen innerhalb eines spezifizierten Toleranzbereichs einhalten. Sobald diese Synchronisation erreicht ist, erfolgt ein Transfer von Stoffen bzw. Stoffgemischen vom Transfermodul 14 in das Fluidik-modul 10 bzw. vom Fluidikmodul 10 in das Transfermodul 14. Nach dem abgeschlossenen Transfer kann beispielsweise die Kreisbewegung des Transfermoduls gestoppt werden. Zu einem späteren Zeitpunkt kann die Kreisbewegung des Transfermoduls wieder gestartet werden, um nach einer weiteren Synchronisation einen Transfer weiterer Stoffe bzw. Stoffgemische zu bewirken.

Es bedarf keiner separaten Erläuterung, dass zur Regelung erforderliche Echtzeit-Messdaten bereitgestellt bzw. erfasst werden. Zu diesem Zweck können entsprechende Sensoren, zur Erfassung der Positionen, absolut oder relativ zueinander, der Fluidöffnung und der Transferöffnung vorgesehen sein. Beispielsweise können Drehwinkelsensoren vorgesehen sein, um die jeweilige Winkelposition, an der sich die Öffnungen befinden, zu erfassen. Ferner können Sensoren vorgesehen sein, um eine radiale Position der Transferöffnung und/oder eine radiale Position der Fluidöffnung relativ zu der Drehachse R zu erfassen. Die so erfassten Echtzeit-Messdaten können der Steuerung 30 über Kommunikationsverbindungen 32 zur Verfügung gestellt werden, um basierend darauf die Drehungen zu synchronisieren.

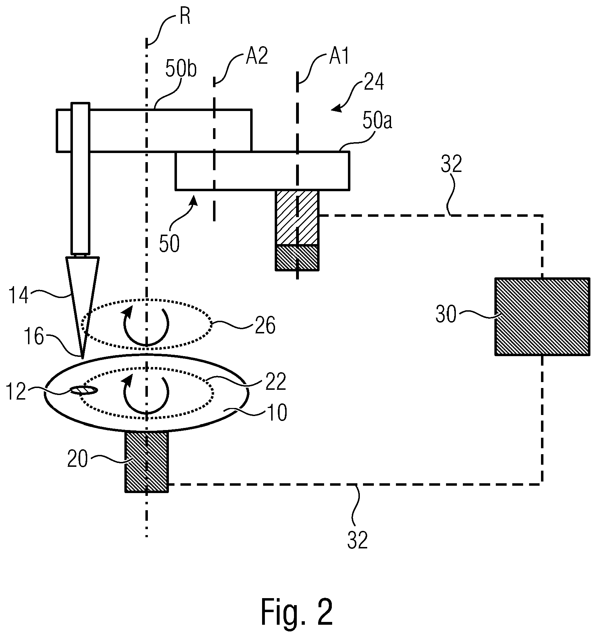

Bei Beispielen der vorliegenden Erfindung kann der zweite Antrieb einen Roboterarm mit mehreren Achsen aufweisen, an dessen Ende sich eine elektronische Pipette befindet. Fig. 2 zeigt rein schematisch ein Beispiel, bei dem der zweite Antrieb 24 einen Roboterarm mit mehreren Armabschnitten 50a und 50b aufweist, wobei Armabschnitt 50a um eine Achse A1 und Armabschnitt 50b um eine Achse A2 relativ zum Armabschnitt 50a drehbar ist. Durch eine entsprechende Ansteuerung der Drehungen der Armabschnitte um die jeweilige Achse kann eine Rotation des Transfermoduls 14, das an dem von der Achse A2 beabstandeten Ende des Armabschnitts 50b angebracht ist, bewirkt werden, so dass sich die Transferöffnung 16 entlang der Kreisbahn 26 bewegt.

Bei Beispielen kann der zweite Antrieb einen Rotoberarm mit mehreren Gelenken und Achsen aufweisen, an dessen Ende sich das Transfermodul, beispielsweise in Form einer elektronischen Pipette, befindet. Bei Beispielen kann der Roboterarm des zweiten Antriebs durch einen Roboterarm mit mehreren Achsen, beispielsweise fünf Achsen eines sogenannten Fünf-Achs-Roboterarms, gebildet sein. Bei einem solchen mehrachsigen Roboterarm kann eine synchronisierte Kreisbewegung durch die Überlagerung mehrerer Gelenkbewegungen erzeugt werden.

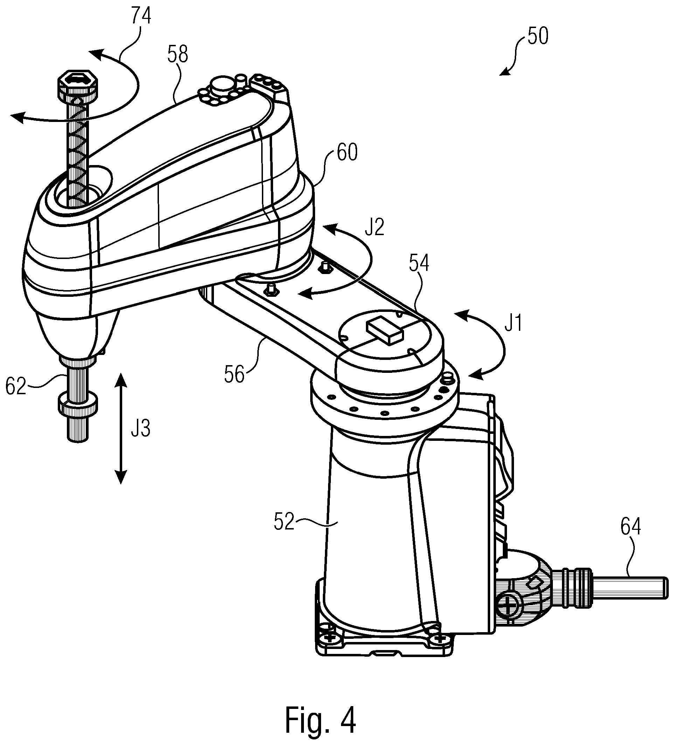

Bei Beispielen kann der zweite Antrieb einen Roboterarm vom Typ SCARA aufweisen. Ein Beispiel eines solchen Roboterarms 50 ist in Fig. 4 gezeigt. Der Roboterarm weist eine Basis 52, ein Schultergelenk 54, ein inneres Verbindungsteil 56 und ein äußeres Verbindungsteil 58 auf. Das innere Verbindungsteil 56 und das äußere Verbindungsteil 58 sind über ein Ellbogengelenk 60 verbunden. An dem von dem Ellbogengelenk 60 beabstandeten Ende des äußeren Verbindungsteils 58 ist eine drehbare Pinole 62 angeordnet. Ein Ende des inneren Verbindungsteils 56 ist relativ zur Basis 52 über das Schultergelenk 54 drehbar, siehe J1 in Fig. 4. Das äußere Verbindungsteil 58 ist relativ zum inneren Verbindungsteil 56 über das Ellbogengelenk 60 drehbar, J2 in Fig. 4. Die Pinole 62 ist um eine Drehachse drehbar, J4 in Fig. 4, und relativ zu der Drehachse axial beweglich, J3 in Fig. 4. Durch eine entsprechende Ansteuerung des Roboterarms 50, beispielsweise drahtgebunden über Leitungen 64, mittels der Steuerung 30 kann die Bewegung des Transfermoduls 14 geregelt werden, um die Bewegung der Transferöffnung entlang der Kreisbahn mit der Bewegung der Fluidöffnung entlang der Kreisbahn zu synchronisieren. Bei einem Roboterarm nach dem SCARA-Prinzip kann somit eine synchronisierte Kreisbewegung durch die Überlagerung mehrerer Gelenkbewegungen erzeugt werden, bei dem in Fig. 4 gezeigten Beispiel durch eine überlagerte Bewegung J1, J2 der Gelenke 54 und 60. Der in Fig. 4 gezeigte Roboterarm vom SCARA-Typ kann beispielsweise als der Roboterarm 50 in Fig. 2 eingesetzt werden. Durch eine entsprechende Steuerung der Gelenke des Roboterarms kann auch eine radiale Position des Transfermoduls relativ zu der Drehachse, um die das Transfermodul rotiert, eingestellt werden.

Bei Beispielen kann das Transfermodul in Form einer elektronischen Pipette an dem Roboterarm, beispielsweise der Pinole 62, angebracht sein. Der Roboterarm kann gesteuert werden, um die Pipettenspitze in axialer Richtung bezüglich der Drehachse zu bewegen. Somit kann der Roboterarm als Manövriereinrichtung dienen, durch die die Pipettenöffnung in eine Fluidöffnung eines Rotors und eine Flüssigkeit eingetaucht werden kann, die sich in einer an die Fluidöffnung angrenzenden Fluidkammer befindet. Somit kann durch die elektronische Pipette Flüssigkeit zwischen der Fluidöffnung und der Transferöffnung in Richtung von der Fluidöffnung zu der Transferöffnung transferiert werden.

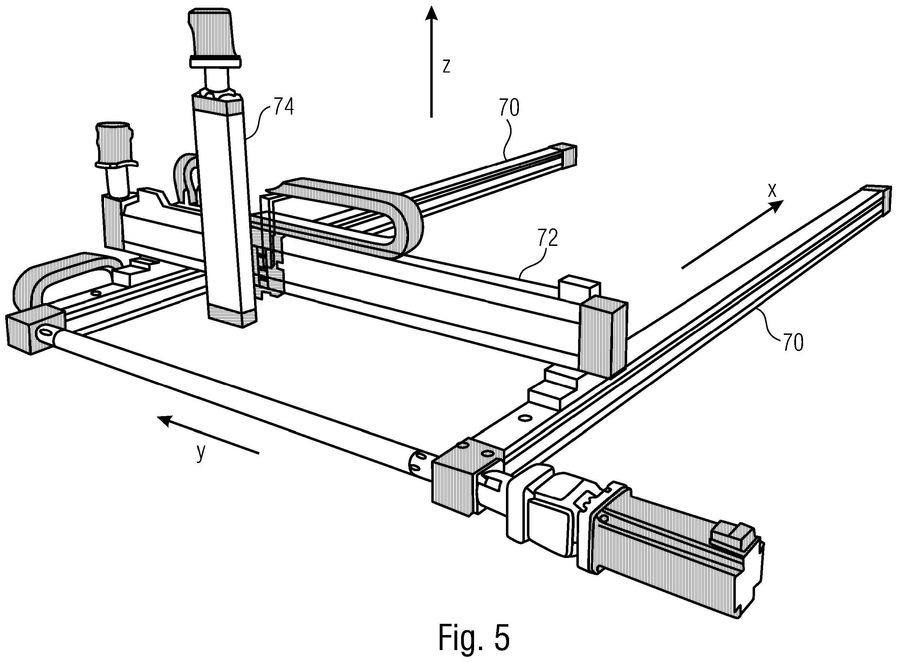

Bei Beispielen kann ein Linearachsensystem verwendet werden, um die Rotation des Transfermoduls zu bewirken. Ein Beispiel eines solchen Linearachsensystems ist in Fig. 5 rein schematisch dargestellt. Das Linearachsensystem weist Trägerstangen 70 auf, die eine Bewegung einer Querstange 72 in einer Richtung entlang einer ersten linearen Achse x ermöglichen. Die Querstange 72 ermöglicht eine Bewegung eines Endeffektors 74 in Richtung einer zweiten linearen Achse y. Somit kann durch Verfahren der Querstange 72 in der Richtung x und Verfahren des Endeffektors 74 in Richtung y eine Kreisbewegung des Endeffektors 74 bewirkt werden. An dem Endeffektor 74 kann das Transfermodul 14 angebracht sein, so dass durch eine entsprechende Ansteuerung eine Bewegung der Transferöffnung des Transfermoduls entlang der Kreisbahn bewirkt werden kann. Somit kann bei dem Linearachsensystem die synchronisierte Drehbewegung durch eine Überlagerung einer Sinus- und. Kosinus-Funktion im Bewegungsablauf von zwei orthogonal zueinander angeordneten Linearachsen (x, y) genutzt werden, um eine daraus resultierende Kreisbewegung zu erzeugen.

Bei Beispielen kann das Transfermodul in Form einer elektronischen Pipette an dem Endeffektor 74 angebracht sein. Der Endeffektor ermöglicht eine Bewegung des Transfermoduls in Richtung einer dritten linearen Achse z. Somit kann der Endeffektor gesteuert werden, um die Pipettenspitze in axialer Richtung bezüglich der Drehachse zu bewegen. Somit kann der Endeffektor als Manövriereinrichtung dienen, durch die die Pipettenöffnung in eine Fluidöffnung eines Rotors und eine Flüssigkeit eingetaucht werden kann, die sich in einer an die Fluidöffnung angrenzenden Fluidkammer befindet. Somit kann durch die elektronische Pipette Flüssigkeit zwischen der Fluidöffnung und der Transferöffnung in Richtung von der Fluidöffnung zu der Transferöffnung transferiert werden.

Bei alternativen Beispielen kann der zweite Antrieb einen Drehmotor aufweisen, beispielsweise einen Schrittmotor oder einen Servomotor, an dessen Rotor das Transfermodul angebracht ist. Bei Beispielen kann ein Drehmotor auch am Endeffektor eines jeweiligen Antriebs angebracht sein, beispielsweise dem jeweils entfernten Ende des Armabschnitts 50b in Fig. 2, des äußeren Verbindungsteils 58 in Fig. 4 oder dem Endeffektor 74 in Fig. 5.

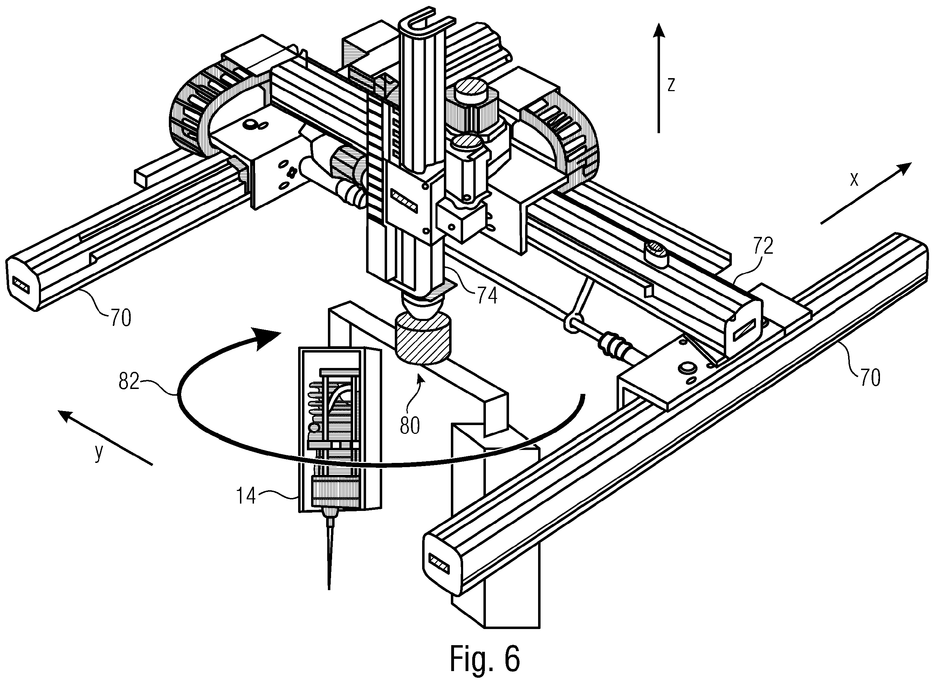

Es bedarf keiner weiteren Erläuterung, dass jedes beliebige Automatisierungssystem verwendet werden kann, das geeignet ist, um eine entsprechende Bewegung des Transfermoduls zu bewirken, durch die eine Rotation der Transferöffnung entlang der Kreisbahn um die Drehachse bewirkt werden kann. Beispielsweise zeigt Fig. 6 schematisch die Darstellung eines Automatisierungssystems, das aus einer Kombination eines Linearachsensystems und eines Rotationssystems besteht. Dabei ist am Endeffektor 74 eines Linearachsensystems ein Drehsystem 80 angebracht, durch das eine Rotation des Transfermoduls 14 bewirkt werden kann, wie durch einen Pfeil 82 in Fig. 6 angedeutet ist. Auch bei diesem Beispiel ermöglicht der Endeffektor eine Bewegung des Transfermoduls entlang der dritten linearen Achse z.

Wie aus der obigen Beschreibung ersichtlich ist, weisen Beispiele der Erfindung eine Manövriereinrichtung auf, durch die das Transfermodul und/oder das Fluidikmodul in einer Richtung (erste/zweite Richtung) bewegt werden können, um das Transfermodul und das Fluidikmodul aufeinander zu und voneinander weg zu bewegen, um dadurch den Abstand zwischen Fluidöffnung(en) und Transferöffnung(en) zu verringern und zu vergrößern. Eine solche Bewegung kann vorteilhaft sein, um ein Aufnehmen von Flüssigkeiten aus dem Fluidikmodul, beispielsweise einem Röhrchen, oder das Abgeben von Flüssigkeiten mit einem geringen Abstand zwischen Transfermodul und Fluidikmodul zu ermöglichen. Bei Beispielen kann das Transfermodul ausgelegt sein, um eine entsprechende Bewegung der Transferöffnung zu bewirken, wie dies bei elektronischen Pipetten, die eine integrierte "z-Achse" aufweisen, der Fall sein kann.

Bei Beispielen kann das Transfermodul eine elektronische Pipette aufweisen, die ausgelegt ist, um durch eine Pipettenöffnung Flüssigkeit aufzunehmen und/oder auszustoßen. Allgemein kann unter einer elektronischen Pipette hierin ein System verstanden werden, das sich durch ein elektronisches Signal befüllen bzw. entleeren lässt, im Gegensatz zu einer manuellen Betätigung bei konventionellen Pipetten. Eine solche elektronische Pipette wird am Ende des zweiten Antriebs (des oberen rotierenden Systems) montiert und mit der Steuerung verbunden, drahtgebunden mittels einer Signalleitung oder drahtlos. Die elektronische Pipette kann somit durch die Steuerung betätigt werden. Die elektronische Pipette kann eine integrierte Linearachse enthalten, welche zusätzlich oder anstelle einer der oben beschriebenen Möglichkeiten die Pipettenspitze in axialer Richtung bezüglich der Drehachse zu bewegen. Bei alternativen Ausführungsbeispielen kann das Transfermodul einen elektronischen Dispenser oder eine Pumpe bzw. den Auslass einer Pumpe in Form eines Schlauches aufweisen, bei dem ein Flüssigkeitsausstoß beispielsweise mittels eines Piezoaktuators oder elektromagnetisch erfolgen kann. Es bedarf keiner separaten Erläuterung, dass das Transfermodul jegliches System aufweisen kann, das geeignet ist, automatisiert, beispielsweise durch elektronische Steuerung mittels der hierein beschriebenen Steuerung, Flüssigkeit durch eine Transferöffnung auszustoßen oder aufzunehmen.

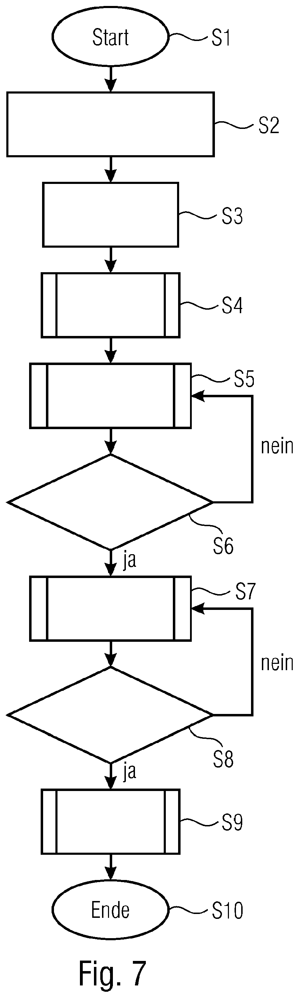

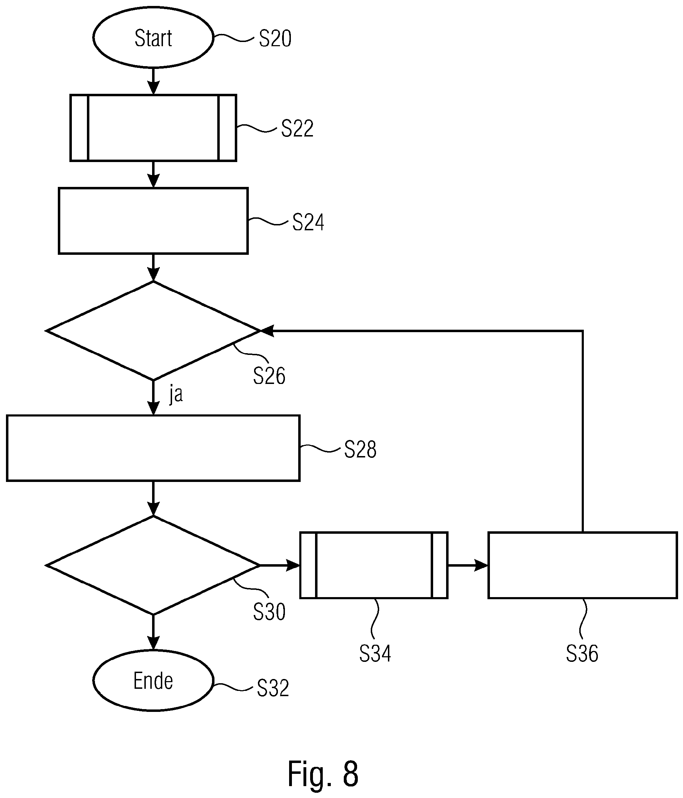

Bezugnehmend auf die Figuren 7 und 8 wird nun ein Beispiel eines Verfahrens zum Synchronisieren der Drehungen des Fluidikmoduls und des Transfermoduls beschrieben. Dabei wird im Folgenden davon ausgegangen, dass das Fluidikmodul mit dem ersten Antrieb einen Rotor bildet und der zweite Antrieb einen Roboterarm aufweist, an dem das Transfermodul angebracht ist. Es bedarf keiner separaten Erwähnung, dass ein entsprechendes Verfahren auch mit allen anderen hierin beschriebenen Fluidikmodulen, Transfermodulen, ersten Antrieben und zweiten Antrieben implementiert werden kann.

Das Verfahren beginnt bei S1. Bei S2 wird die Position des Rotors kalibriert. Bei Beispielen kann hierzu ein Mikrocontroller des Rotors eingestellt werden, um eine Winkelposition von Null anzuzeigen, wenn sich der Rotor in der Null-Position befindet. Bei S3 wird eine Zielposition, an der sich die Fluidöffnung zum Flüssigkeitstransfer befinden soll, um einen Flüssigkeitstransfer zu bewirken, festgelegt. Dies umfasst das Festlegen einer Zielwinkelposition des Rotors, sowie in der Regel das Festlegen eines Radius bezüglich der Drehachse. Beispielsweise kann ein Radius bei S3 festgelegt werden, wenn der Rotor mehrere Fluidöffnungen an unterschiedlichen radialen Positionen desselben aufweist. Falls die axiale Position der Fluidöffnung einstellbar ist, z.B. durch Bewegen des Rotors in der axialen Richtung, kann das Festlegen der Zielposition auch das Festlegen einer axialen Position der Fluidöffnung umfassen, wobei das Verfahren dann ein Einstellen der axialen Position der Fluidöffnung auf die Zielposition aufweisen kann. Ferner kann Flüssigkeit, die transferiert werden soll, in das Transfermodul, bei dem es sich um eine elektronische Pipette handeln kann, aufgenommen werden, falls die elektronische Pipette nicht vorab befüllt wurde. Die Nullpunktkalibrierung in Schritt S2 kann einmal zu Beginn des Verfahrens stattfinden, während Schritt S3 in der Regel bei jedem Fluidtransfer durchgeführt wird.

Bei S4 wird eine Drehung des Roboterarms, der den zweiten Antrieb darstellt, mit einer bestimmten Rotationsfrequenz bewirkt. Die Rotationsfrequenz kann beispielsweise in einem Bereich von 3-10 Hz liegen. Da die tatsächliche Rotationsfrequenz von der bestimmten Rotationsfrequenz abweichen kann, wird in einem Schritt S5 die tatsächliche Rotationsfrequenz des Roboterarms gemessen und bei S6 wird bestimmt, ob die gemessene Rotationsfrequenz des Roboterarms stabil ist. Ist die Rotationsfrequenz nicht stabil, so werden die Schritte S5 und S6 wiederholt, bis die Rotationsfrequenz des Roboterarms stabil ist. Wird im Schritt S6 bestimmt, dass die Rotationsfrequenz stabil ist, wird im Schritt S7 eine Synchronisation der Drehung des Rotors auf die Drehung des Roboterarms durchgeführt. Dabei kann sich der Rotor bereits in Drehung befinden (z.B. bei höherer Rotationsfrequenz aus einem vorherigen Prozessschritt) oder erstmal in Drehung versetzt werden (z.B. bei Durchführung des ersten Prozessschrittes eines Anwendungsprotokolls). Im Schritt S8 wird überprüft, ob die Synchronisation erfolgreich war. Falls bestimmt wird, dass die Synchronisation nicht erfolgreich war, werden die Schritte S7 und S8 wiederholt. Falls im Schritt S8 bestimmt wird, dass die Synchronisation erfolgreich war, was anzeigt, dass die Transferöffnung und die Fluidöffnung in der korrekten Ausrichtung zueinander sind, springt das Verfahren zum Schritt S9, wo Flüssigkeit zwischen der Transferöffnung und der Fluidöffnung transferiert wird. Im Anschluss endet das Verfahren bei S10.

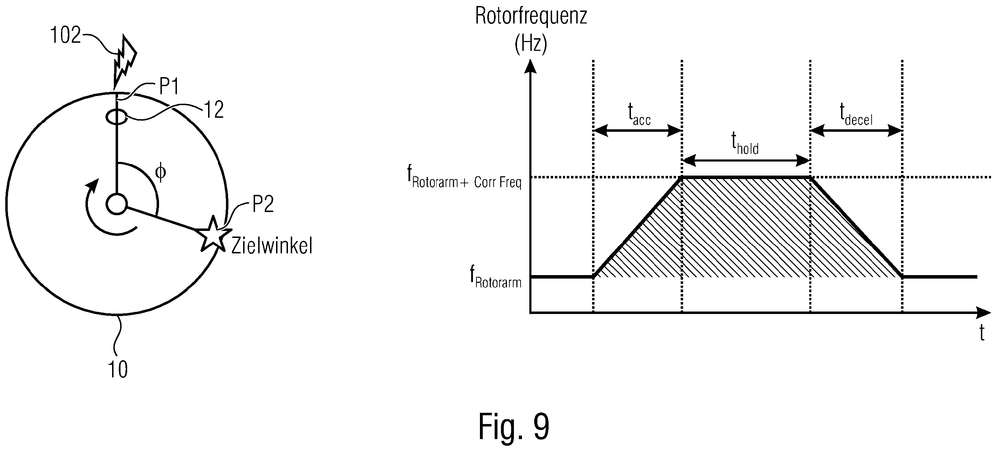

Bezugnehmend auf die Fig. 8 und 9 wird nun ein Beispiel beschrieben, wie die Synchronisation in den Schritten S7 und S8 stattfinden kann. Das Verfahren beginnt nach dem Schritt S6 in Fig. 7, wo bestimmt wurde, dass die Rotationsfrequenz des Roboterarms stabil ist, S20 in Fig. 8. Bei S22 wird diese stabile Rotationsfrequenz des Roboterarms gemessen.

Bei S24 wird eine Rotationsfrequenz des Rotors auf die Rotationsfrequenz des Roboterarms eingestellt. Bei S26 wird bestimmt, ob ein Roboterarm-Trigger erfasst wurde. Ein Roboterarm-Trigger wird ausgelöst, wenn ein physikalisches Merkmal des Roboterarms sich an einer bestimmten Winkelposition befindet, so dass der Roboterarm-Trigger eine vorbestimmte Winkelposition des Roboterarm-Endeffektors auf seiner Kreisbahn angibt. Bei Beispielen kann ein Roboterarm-Trigger einmal pro Drehung des Endeffektors um 360° ausgelöst werden. Das Auslösen des Roboterarm-Triggers wird als periodisches Positionsfeedback verwendet, um zu erfahren, ob der Endeffektor an einer vorbestimmten bekannten Position angelangt ist.

Wenn im Schritt S26 erfasst wird, dass der Roboterarm-Trigger ausgelöst wurde, wird die Rotorwinkelposition, an der sich der Rotor zu diesem Zeitpunkt befindet, als momentane Rotorwinkelposition eingestellt. Anders ausgedrückt wird zu dem Zeitpunkt, zu dem der Roboterarm-Trigger ausgelöst wird, die momentane Rotorwinkelposition gemessen. Im Anschluss wird im Schritt S28 eine Differenz zwischen der Zielwinkelposition und der momentanen Rotorwinkelposition bestimmt. Bei S30 wird überprüft, ob der Betrag der berechneten Differenz in einem vorbestimmten Toleranzbereich liegt. Falls der Betrag der berechneten Differenz innerhalb des Toleranzbereichs liegt, war die Synchronisation erfolgreich und endet bei S32. Im Anschluss daran springt das Verfahren zu Schritt S9 in Fig. 7. Liegt bei S30 die berechnete Differenz nicht innerhalb des Toleranzbereichs, werden Korrekturparameter ermittelt, die zur Steuerung des ersten Antriebs, also des Rotors, verwendet werden, um die Drehung des Rotors mit der Drehung des Roboterarms zu synchronisieren. Zu diesem Zweck kann bei S34 eine Korrekturfrequenz und eine Korrekturzeit mittels linearer Interpolation berechnet werden. Bei S36 werden die Korrekturparameter auf die Drehung des Rotors angewendet, um die bei S30 berechnete Winkeldifferenz zu reduzieren oder bestenfalls zu kompensieren. Danach springt das Verfahren zu Schritt S26 zurück, woraufhin die Schritte S26 bis S30 wiederholt werden, bis im Schritt S30 bestimmt wird, dass die berechnete Differenz in dem vorbestimmten Toleranzbereich liegt. Wenn dies der Fall ist, war die Synchronisation erfolgreich und das Verfahren springt zu Schritt S9 in Fig. 7. Der vorbestimmte Toleranzbereich ist so festgelegt, dass, wenn sich die Winkeldifferenz in demselben befindet, ein Flüssigkeitstransfer zwischen Transferöffnung und Fluidöffnung während der Drehungen des Transfermoduls und des Fluidikmoduls möglich ist.

Die Regelung der Drehung des Rotors, um sie mit der Drehung des Roboterarms zu synchronisieren, wird bezugnehmend auf Fig. 9 nochmals erläutert. Fig. 9 zeigt schematisch einen Rotor 10 mit einer Fluidöffnung 12, zu der ein Flüssigkeitstransfer stattfinden soll. Die Fluidöffnung 12 befinde sich zu einem Zeitpunkt des Roboterarm-Triggers, der schematisch bei 102 gezeigt ist, an der Position P1. Die Zielwinkelposition, an der sich die Fluidöffnung 12 zu dem Zeitpunkt, zu dem der Roboterarm-Trigger 102 auftritt, befinden soll, befindet sich bei P2. Somit existiert zwischen dem tatsächlich gemessenen Winkel und dem Zielwinkel ein Winkelversatz Φ. Dieser Winkelversatz wird durch die beschriebene Synchronisation in den vorbestimmen Toleranzbereich gebracht. Zu diesem Zweck kann, wie in Fig. 9 gezeigt ist, die Rotorfrequenz zunächst für eine Beschleunigungszeit t_{acc} von der Roboterarmrotationsfrequenz f_{Roboterarm} auf eine erhöhte Rotationsfrequenz f_{Roboterarm} + corrFreq erhöht werden, für eine Haltezeit t_{hold} auf dieser erhöhten Frequenz gehalten werden und dann für eine Abbremszeit t_{decel} auf die Roboterarm-Rotationsfrequenz f_{Roboterarm} gesenkt werden. Dadurch wird eine Relativdrehung zwischen Roboterarm und Rotor bewirkt, durch die der Versatzwinkel Φ zwischen der Transferöffnung, die sich mit dem Roboterarm dreht, und der Fluidöffnung, die sich mit dem Rotor dreht, kompensiert wird, so dass diese zueinander ausgerichtet sind, um einen Flüssigkeitstransfer zwischen denselben zu ermöglichen.

Obwohl bei dem beschriebenen Beispiel die Drehung des Fluidikmoduls gesteuert wird, um mit der Drehung des Transfermoduls synchronisiert zu werden, kann bei anderen Ausführungsbeispielen die Drehung des Transfermoduls auf die Drehung des Fluidikmoduls synchronisiert werden. Bei Beispielen können die Drehungen auch synchronisiert werden, indem auf beide Drehungen Korrekturparameter angewendet werden, um erfasste Versatzwinkel zwischen denselben zu kompensieren.

Bei Beispielen wird somit eine Regelung durchgeführt, um basierend auf Echtzeitdaten, die die jeweiligen Winkelpositionen der Transferöffnung und der Fluidöffnung wiedergeben, eine Synchronisierung der Drehungen des Transfermoduls und des Fluidikmoduls zu erreichen. Entsprechende Signale können unter Verwendung beliebiger geeigneter Kommunikationsprotokolle zwischen jeweiligen Sensoren und Komponenten, die die Steuerung bilden, übertragen werden. Beispielsweise kann ein Triggersignal einmal pro Umdrehung des zweiten Antriebs von dem zweiten Antrieb zu der Steuerung übertragen werden und ein Bewegungs-Stopp-Signal kann von der Steuerung zu dem zweiten Antrieb übertragen werden, beispielsweise wenn ein Flüssigkeitstransfer abgeschlossen wurde. Ein Positionssignal, das die Winkelposition des ersten Antriebs (Rotors) wiedergibt, kann von dem ersten Antrieb zu der Steuerung übertragen werden. Entsprechende Signale, um basierend auf den von den Sensoren stammenden Signalen zum einen die Rotationsfrequenz des ersten Antriebs und des zweiten Antriebs einzustellen und zum anderen die Synchronisation zu bewirken, können von der Steuerung zu dem ersten und dem zweiten Antrieb übertragen werden. Beliebige geeignete Kommunikations-Protokolle und -Schnittstellen, wie z. B. UART (Universal Asynchronous Receiver/Transmitter), TCP/IP (Transmission Control Protocol/Internet Protocol), CAN (Controller Area Network) und/oder MODBUS können für solche Kommunikationen verwendet werden.

Unter Verwendung von Beispielen der vorliegenden Erfindung lassen sich somit Stoffe bzw. Stoffgemische in Form von Flüssigkeiten verlustarm oder verlustfrei und präzise an beliebige Orte eines Fluidikmoduls unter Rotation einbringen und/oder von dort entnehmen. Eine Vorgehensweise, bei der ein Fluidikmodul und ein Transfermodul unter Verwendung von separaten Antrieben jeweils in Rotation versetzt werden, wobei die Rotationen miteinander synchronisiert werden, war bisher nicht bekannt. Vielmehr war es üblich, zum Einbringen von Stoffen bzw. Stoffgemischen entweder die Rotation des Fluidikmoduls anzuhalten oder die Stoffe bzw. Stoffgemische bereits vor Beginn des ersten Rotationsschritts einzubringen. Es war insbesondere nicht ersichtlich, dass es möglich ist, eine hochpräzise und über einen längeren Transfer-Zeitraum stabile Synchronisation der beiden Kreisbewegungen zu erreichen. Es wurde ferner überraschend festgestellt, dass sich beim Einsatz einer elektronischen Pipette die mit Flüssigkeit befüllte Pipettenspitze unter den wirkenden Zentrifugalkräften nicht unkontrolliert, beispielsweise frühzeitig, entleert, sondern erst nach Erreichen einer stabilen Synchronisation ansprechend auf ein elektronisches Betätigungssignal. Somit ist es gemäß Beispielen der Erfindung möglich, den Flüssigkeitstransfer exakt nach Erreichen der stabilen Synchronisation durch elektronische Betätigung der Pipette zu bewirken, um eine kontrollierte Entleerung der Pipette in die Fluidöffnung des Fluidikmoduls und somit in Fluidikstrukturen des Fluidikmoduls zu erreichen.

Bei Beispielen der Erfindung kann des Fluidmodul mehrere entsprechende Fluidöffnungen aufweisen und/oder das Transfermodul mehrere entsprechende Transferöffnungen. Somit ermöglichen Beispiele, dass verschiedene Flüssigkeiten gleichzeitig oder zu unterschiedlichen Zeiten an verschiedenen Orten zwischen Transfermodul und Fluidmodul transferiert werden oder umgekehrt. Beispielsweise könnte das Transfermodul eine Anzahl von Dispenserköpfen, z.B. fünf integrierte Dispenserköpfe, aufweisen, und rotiert werden, um fünf verschiedene Flüssigkeiten zu verschiedenen Zeitpunkten/Orten in die Fluidöffnungen des Fluidikmoduls zu transferieren.

Beispiele der Erfindung schaffen Vorrichtungen und Verfahren, bei denen ein System zur Abgabe von Flüssigkeit in Rotation versetzt wird, um Flüssigkeiten in ein zweites rotierendes Fluidik-System zu transportieren oder von dem zweiten rotierenden Fluidik-System zu entnehmen. Dabei kann die Abgabe der Flüssigkeit kontinuierlich als Strahl oder diskontinuierlich als Tropfen erfolgen, je nach Betätigung des Transfermoduls. Bei Beispielen kann der Versatz der Flugbahn auf der freien Strecke zwischen Abgabesystem (Transfermodul) und Fluidik-System (Fluidikmodul) kompensiert werden. Bei Beispielen kann zur Rotation des Abgabesystems ein Roboterarm nach dem SCARA-Prinzip verwendet werden. Bei Beispielen kann zur Rotation des Abgabesystems eine durch Überlagerung entstehende Kreisbewegung von zwei Computer-gesteuerten Linearachsen verwendet werden. Bei Beispielen kann zur Rotation des Abgabesystems ein Modul mit integriertem Drehmotor verwendet werden. Bei Beispielen kann ein System zur Abgabe von Flüssigkeit zur Versorgung mehrerer rotierender Fluidik-Systeme genutzt werden, indem beispielsweise das Fluidikmodul mehrere fluidische Auffangkammern mit zugeordneten Fluidöffnungen aufweist. Bei solchen Systemen kann der zweite Antrieb ausgelegt sein, um die Transferöffnung jeweils relativ zu einer der mehreren der Fluidöffnungen zu positionieren und während der Drehungen zu halten, um einen Flüssigkeitstransfer zwischen der jeweiligen Fluidöffnung und der Transferöffnung zu ermöglichen. Bei solchen Beispielen kann der zweite Antrieb ferner ausgelegt sein, um die radiale Position der Transferöffnung bezüglich der Drehachse zu verändern bzw. einzustellen.

Beispiele der Erfindung können auf einer Vielzahl von Gebieten Anwendung finden. Beispiele können bei der Automatisierung von Extraktionsprotokollen verwendet werden, um Analyte, z. B. DNA, aus biologischen Proben, z. B. Blutplasma, zu isolieren. Beispiele können bei der Automatisierung von Probenvorbereitungsprotokollen verwendet werden, um Analysen, z. B. ein Next Generation Sequencing (Sequenzierung nächster Generation) vorzubereiten, beispielsweise DNA-Library-Preparation-Protokolle (DNA-Bibliotheks-Vorbereitungsprotokolle). Beispiele können bei der Automatisierung von Zellkulturprotokollen verwendet werden, um beispielsweise in definierten Zeitabständen oder nach Bedarf Medien hinzuzugeben und/oder zu entnehmen und somit kontrollierte Bedingungen zu schaffen (Online-Prozesskontrolle).

Beispiele der Erfindung bieten gegenüber herkömmlichen Verfahren zahlreiche Vorteile. Beispielsweise wird der Transfer von Medien in ein Fluidikmodul unter Rotation und somit unter Beibehaltung der Zentrifugalkräfte im Fluidikmodul ermöglicht, wodurch beispielsweise die kapillare Benetzung von Kanälen oder eine Resuspension von zuvor sedimentierten Stoffen bzw. Analyten vermieden werden kann. Beispiele der Erfindung ermöglichen die Verlagerung von Komplexität aus dem Verbrauchsartikel, dem Fluidikmodul, in das Gerät und somit eine langfristige Kostenersparnis. Beispielsweise können Funktionalisierungen im Fluidikmodul oder auch der Einsatz von Schlauchbeuteln vermieden werden. Durch die erfindungsgemäße Vorgehensweise ist eine Vorlagerung in dem Verbrauchsartikel nicht mehr erforderlich, was Fläche auf dem Fluidikmodul schafft, die zur Realisierung längerer bzw. komplexerer Prozessketten genutzt werden kann oder zur parallelen Prozessierung mehrerer Proben in einem Fluidikmodul genutzt werden kann. Beispiele ermöglichen das Einbringen sehr großer Flüssigkeitsvolumina im Bereich von mehreren Millilitern, was mit gängigen Vorlagerungstechniken nicht möglich ist. Daneben ermöglichen Beispiele auch das Einbringen sehr kleiner Flüssigkeitsvolumina im Bereich von einigen Mikrolitern, was mit gängigen Vorlagerungstechniken nicht möglich ist. Dies ist insbesondere bei solchen Anwendungen von Vorteil, bei denen kostspielige Reagenzien eingesetzt werden. Beispiele ermöglichen eine elektronische Programmierbarkeit der Bereitstellung von Stoffen und Stoffgemischen und somit die Möglichkeit zur aktiven Kontrolle eines Prozesses (Online-Prozesskontrolle). Eine elektronisch gesteuerte Bereitstellung von Stoffen, wie sie bei Beispielen der Erfindung durchgeführt wird, ermöglicht eine hohe Prozess-Robustheit, da herstellungsbedingte Unsicherheiten durch Siegelnähte der Schlauchbeutel, Wachsventile und dergleichen vermieden werden können. Ferner ermöglichen Beispiele der Erfindung neben einer Abgabe von Flüssigkeiten aus dem Transfermodul in das Fluidikmodul auch eine Entnahme von Produkten aus dem Fluidikmodul unter Rotation, wodurch wiederum beispielsweise eine kapillare Benetzung von Kanälen oder eine Resuspension von zuvor sedimentierten Stoffen bzw. Analyten vermieden werden kann.

Obwohl Merkmale der Erfindung jeweils anhand von Vorrichtungsmerkmalen oder Verfahrensmerkmalen beschrieben wurden, ist für Fachleute offensichtlich, dass entsprechende Merkmale jeweils auch Bestandteil eines Verfahrens oder einer Vorrichtung sein können. So kann jeweils die Vorrichtung konfiguriert sein, um entsprechende Verfahrensschritte durchzuführen, und die jeweilige Funktionalität der Vorrichtung kann entsprechende Verfahrensschritte darstellen.

In der vorhergehenden detaillierten Beschreibung wurden teilweise verschiedene Merkmale in Beispielen zusammengruppiert, um die Offenbarung zu rationalisieren. Diese Art der Offenbarung soll nicht als Absicht implementiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn, es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

Die oben beschriebenen Beispiele sind nur darstellend für die Grundsätze der vorliegenden Offenbarung. Es ist zu verstehen, dass die Modifikationen und Variationen der Anforderungen und der Einzelheiten, die beschrieben sind, für Fachleute offensichtlich sind. Es ist daher beabsichtigt, dass die Erfindung nur durch die beigefügten Patentansprüche und nicht durch die spezifischen Einzelheiten, die zum Zwecke der Beschreibung der Erklärung der Beispiele dargelegt sind, begrenzt ist.

## Patentansprüche

1. Vorrichtung zum Transferieren von Flüssigkeit zwischen um eine Drehachse (R) rotierenden Modulen (10, 14), die folgende Merkmale aufweist:
ein Fluidikmodul (10), das eine Fluidöffnung (12) aufweist, die in einer ersten Richtung orientiert ist und mit Fluidikstrukturen in dem Fluidikmodul (10) fluidisch verbunden ist, wobei die erste Richtung einer ersten axialen Richtung bezüglich der Drehachse (R) entspricht oder einen Winkel < 90° zu der ersten axialen Richtung aufweist;
ein Transfermodul (14), das eine Transferöffnung (16) aufweist, die in einer zweiten Richtung orientiert ist, wobei die zweite Richtung einer zweiten axialen Richtung bezüglich der Drehachse (R), die entgegengesetzt zu der ersten axialen Richtung ist, entspricht oder einen Winkel < 90° zu der zweiten axialen Richtung aufweist, wobei das Transfermodul (14) ausgelegt ist, um Flüssigkeit durch die Transferöffnung (16) abzugeben oder aufzunehmen;
einen ersten Antrieb (20), der ausgelegt ist, um eine Drehung des Fluidikmoduls (10) zu bewirken, um die Fluidöffnung (12) entlang einer Kreisbahn um die Drehachse (R) zu bewegen;
einen zweiten Antrieb (24), die ausgelegt ist, um eine Drehung des Transfermoduls (14) zu bewirken, um die Transferöffnung (16) entlang einer Kreisbahn um die Drehachse (R) zu bewegen; und
eine Steuerung (30), die ausgelegt ist, um die Drehung des Fluidikmoduls (10) und die Drehung des Transfermoduls (14) zu synchronisieren, um die Fluidöffnung (12) und die Transferöffnung (16) relativ zueinander zu positionieren, um während der Drehungen einen Flüssigkeitstransfer zwischen der Transferöffnung (16) und der Fluidöffnung (12) zu ermöglichen.

2. Vorrichtung nach Anspruch 1, bei der die Steuerung (30) ausgelegt ist, um das Transfermodul (14) zu steuern, um Flüssigkeit durch die Transferöffnung (16) abzugeben oder aufzunehmen, während die Drehung des Fluidikmoduls (10) und die Drehung des Transfermoduls (14) synchronisiert sind.

3. Vorrichtung nach Anspruch 1 oder 2, bei der das Transfermodul (14) ausgelegt ist, um Flüssigkeit in der ersten Richtung aus der Transferöffnung (16) kontinuierlich als Strahl oder diskontinuierlich als Tropfen auszustoßen.

4. Vorrichtung nach Anspruch 3, bei der, während der synchronen Drehung, die Fluidöffnung (12) und die Transferöffnung (16) in azimutaler Richtung bezüglich der Drehachse (R) relativ zueinander positioniert sind, um einen Versatz der Flugbahn auf der freien Wegstrecke zwischen der Transferöffnung (16) und der Fluidöffnung (12) zu kompensieren, und/oder
bei der, während der synchronen Drehung, die Fluidöffnung (12) und die Transferöffnung (16) in radialer Richtung bezüglich der Drehachse (R) relativ zueinander positioniert sind, um eine zentrifugal bedingte Ablenkung der Flüssigkeit auf der freien Wegstrecke zwischen der Transferöffnung (16) und der Fluidöffnung (12) zu kompensieren.

5. Vorrichtung nach Anspruch 1 oder 2, bei der das Transfermodul (14) eine elektronische Pipette mit einer Pipettenspitze aufweist, wobei die Transferöffnung (16) an der Pipettenspitze gebildet ist,
wobei die Vorrichtung optional eine Manövriereinrichtung aufweist, die ausgelegt ist, um während der synchronen Drehung die Pipettenspitze in der ersten Richtung und/oder das Fluidikmodul (10) in der zweiten Richtung zu bewegen, um die Pipettenspitze in die Fluidöffnung (12) einzutauchen.

6. Vorrichtung nach einem der Ansprüche 1 bis 5, bei der das Fluidikmodul (10) mehrere in der ersten Richtung bezüglich der Drehachse (R) orientierte Fluidöffnungen (12) aufweist, wobei die Steuerung (30) ausgelegt ist, um die Drehung des Fluidikmoduls (10) und die Drehung des Transfermoduls (14) zu synchronisieren, um jeweils eine der mehreren Fluidöffnungen (12) und die Transferöffnung (16) relativ zueinander zu positionieren, um nacheinander einen Flüssigkeitstransfer zwischen der Transferöffnung (16) und den mehreren Fluidöffnungen (12) zu ermöglichen, und/oder bei der das Transfermodul (14) mehrere Transferöffnungen (16) aufweist, wobei die Steuerung (30) ausgelegt ist, um die Drehung des Fluidikmoduls (10) und die Drehung des Transfermoduls (14) zu synchronisieren, um die mehreren Transferöffnungen (16) und mehrere Fluidöffnungen (12) relativ zueinander zu positionieren, um einen Flüssigkeitstransfer zwischen den Transferöffnungen (16) und mehreren Fluidöffnungen (12) des Fluidikmoduls (10) zu ermöglichen.

7. Vorrichtung nach einem der Ansprüche 1 bis 6, bei der die radiale Position der Transferöffnung (16) einstellbar ist, und/oder
bei der der zweite Antrieb (24) einen Drehmotor, einen Roboterarm mit mehreren Achsen oder ein Linearachsensystem aufweist.

8. Vorrichtung nach einem der Ansprüche 1 bis 7, bei der die Steuerung (30) ausgelegt ist, um den ersten oder zweiten Antrieb (20, 24) zu steuern, um eine Drehung von einem von Fluidikmodul (10) und Transfermodul (14) mit einer Rotationsfrequenz zu bewirken, die der Rotationsfrequenz des anderen von Fluidikmodul (10) und Transfermodul (14) entspricht.

9. Vorrichtung nach Anspruch 8, bei der die Steuerung (30) ausgelegt ist, um einen Winkelversatz zwischen der Fluidöffnung (12) und der Transferöffnung (16) zu erfassen und die Drehung des Fluidikmoduls (10) und/oder des Transfermoduls (14) zu steuern, um den Winkelversatz in einen Toleranzbereich zu bringen, und
bei der die Steuerung (30) optional ausgelegt ist, um zu einem Zeitpunkt, zu dem sich eine von Fluidöffnung (12) und Transferöffnung (16) entlang der jeweiligen Kreisbahn an einer bestimmten Position befindet, den Winkelversatz basierend auf einer Differenz zwischen einer tatsächlichen Position der anderen von Fluidöffnung (12) und Transferöffnung (16) und einer Zielposition zu erfassen.

10. Verfahren zum Transferieren von Flüssigkeit zwischen um eine Drehachse (R) rotierenden Modulen (10, 14), mit folgenden Merkmalen:
Bewirken (40) einer Drehung eines Fluidikmoduls (10), das eine Fluidöffnung (12) aufweist, die in einer ersten Richtung orientiert ist und mit Fluidikstrukturen in dem Fluidik-modul (10) fluidisch verbunden ist, um die Fluidöffnung (12) entlang einer Kreisbahn um die Drehachse (R) zu bewegen, wobei die erste Richtung einer ersten axialen Richtung bezüglich der Drehachse (R) entspricht oder einen Winkel < 90° zu der ersten axialen Richtung aufweist;
Bewirken (42) einer Drehung eines Transfermoduls (14), das eine Transferöffnung (16) aufweist, die in einer zweiten Richtung orientiert ist, wobei die zweite Richtung einer zweiten axialen Richtung bezüglich der Drehachse (R), die entgegengesetzt zu der ersten axialen Richtung ist, entspricht oder einen Winkel < 90° zu der zweiten axialen Richtung aufweist, wobei das Transfermodul (14) ausgelegt ist, um Flüssigkeit durch die Transferöffnung (16) abzugeben oder aufzunehmen, um die Transferöffnung (16) entlang einer Kreisbahn um die Drehachse (R) zu bewegen;
Synchronisieren (44) der Drehung des Fluidikmoduls (10) und der Drehung des Transfermoduls (14), um die Fluidöffnung (12) und die Transferöffnung (16) relativ zueinander zu positionieren; und
Bewirken (46) eines Flüssigkeitstransfers zwischen der Transferöffnung (16) und der Fluidöffnung (12) während der Drehungen des Fluidikmoduls (10) und des Transfermoduls (14).

11. Verfahren nach Anspruch 10, bei dem während der synchronen Drehung des Fluidikmoduls (10) und des Transfermoduls (14) die Fluidöffnung (12) und die Transferöffnung (16) in azimutaler Richtung bezüglich der Drehachse (R) relativ zueinander positioniert sind, um einen Versatz der Flugbahn auf der freien Wegstrecke zwischen Transferöffnung (16) und Fluidöffnung (12) zu kompensieren, und/oder die Fluidöffnung (12) und die Transferöffnung (16) in radialer Richtung bezüglich der Drehachse (R) relativ zueinander positioniert sind, um eine zentrifugal bedingte Ablenkung der Flüssigkeit auf der freien Wegstrecke zwischen Transferöffnung (16) und Fluidöffnung (12) zu kompensieren.

12. Verfahren nach Anspruch 10 oder 11, bei dem das Transfermodul (14) eine elektronische Pipette mit einer Pipettenspitze aufweist, wobei die Transferöffnung (16) an der Pipettenspitze gebildet ist und wobei das Verfahren ein Bewegen der Pipettenspitze in der ersten Richtung und/oder des Fluidikmoduls (10) in der zweiten Richtung während der synchronen Drehung aufweist, um die Pipettenspitze in die Fluidöffnung (12) einzutauchen.

13. Verfahren nach einem der Ansprüche 10 bis 12, das ferner ein Einstellen einer radialen Position der Transferöffnungen (16) aufweist, um nacheinander einen Flüssigkeitstransfer zwischen der Transferöffnung (16) und mehreren in dem Fluidikmodul (10) gebildeten Fluidöffnungen (12) zu bewirken, während die Drehungen des Fluidikmoduls (10) und des Transfermoduls (14) miteinander synchronisiert sind.

14. Verfahren nach einem der Ansprüche 10 bis 13, bei dem die Drehungen des Fluidikmoduls (10) und die Drehung des Transfermoduls (14) derart synchronisiert werden, dass jeweils eine von mehreren Fluidöffnungen (12) des Fluidikmoduls (10) und die Transferöffnung (16) oder eine von mehreren Transferöffnungen (16) des Transfermoduls (14) relativ zueinander positioniert werden, und nacheinander oder gleichzeitig ein Flüssigkeitstransfer zwischen der Transferöffnung (16) oder den Transferöffnungen (16) und den mehreren Fluidöffnungen (12) bewirkt wird.

15. Verfahren nach einem der Ansprüche 11 bis 14, bei dem das Synchronisieren der Drehungen folgende Merkmale aufweist:
Drehen des Fluidikmoduls (10) und Drehen des Transfermoduls (14) mit der gleichen Rotationsfrequenz;
Erfassen eines Winkelversatzes zwischen der Fluidöffnung (12) und der Transferöffnung (16); und
Steuern der Drehung des Fluidikmoduls (10) und/oder des Transfermoduls (14), um den Winkelversatz in einen Toleranzbereich zu bringen, und
bei dem das Erfassen des Winkelversatzes optional folgende Merkmale aufweist:
Erfassen, dass sich eine von Fluidöffnung (12) und Transferöffnung (16) an einer bestimmen Winkelposition entlang der jeweiligen Kreisbahn befindet;
Erfassen der Winkelposition der anderen von Fluidöffnung (12) und Transferöffnung (16), wenn sich die eine von Fluidöffnung (12) und Transferöffnung (16) an der vorbestimmten Winkelposition befindet;
Ermitteln des Winkelversatzes basierend auf einer Differenz zwischen der erfassten Winkelposition der anderen von Fluidöffnung (12) und Transferöffnung (16) und einer Zielposition.

## Claims

1. An apparatus for transferring liquid between modules (10, 14) rotating around a rotation axis (R), comprising:
a fluidic module (10) comprising a fluid opening (12) oriented in a first direction and fluidically connected to fluidic structures in the fluidic module (10), wherein the first direction corresponds to a first axial direction with respect to the rotation axis (R) or comprises an angle of < 90° to the first axial direction;
a transfer module (14) comprising a transfer opening (16) oriented in a second direction, wherein the second direction corresponds to a second axial direction with respect to the rotation axis (R) that is opposite to the first axial direction or comprises an angle of < 90° to the second axial direction, wherein the transfer module (14) is configured to dispense or receive liquid through the transfer opening (16);
a first drive (20) configured to effect a rotation of the fluidic module (10) to move the fluid opening (12) along a circular path around the rotation axis (R);
a second drive (24) configured to effect a rotation of the transfer module (14) to move the transfer opening (16) along a circular path around the rotation axis (R); and
a controller (30) configured to synchronize the rotation of the fluidic module (10) and the rotation of the transfer module (14) to position the fluid opening (12) and the transfer opening (16) relative to each other to allow liquid transfer between the transfer opening (16) and the fluid opening (12) during the rotations.

2. The apparatus according to claim 1, wherein the controller (30) is configured to control the transfer module (14) to dispense or receive liquid through the transfer opening (16), while the rotation of the fluidic module (10) and the rotation of the transfer module (14) are synchronized.

3. The apparatus according to claim 1 or 2, wherein the transfer module (14) is configured to eject liquid in the first direction from the transfer opening (16) continuously as a jet or discontinuously as drops.

4. The apparatus according to claim 3, wherein, during the synchronous rotation, the fluid opening (12) and transfer opening (16) are positioned relative to each other in azimuthal direction with respect to the rotation axis (R) to compensate an offset of the trajectory on the free path between the transfer opening (16) and the fluid opening (12), and/or
wherein, during the synchronous rotation, the fluid opening (12) and transfer opening (16) are positioned relative to each other in radial direction with respect to the rotation axis (R) to compensate for centrifugal deflection of the liquid on the free path between the transfer opening (16) and the fluid opening (12).

5. The apparatus according to claim 1 or 2, wherein the transfer module (14) comprises an electronic pipet with a pipet tip, wherein the transfer opening (16) is formed at the pipet tip,
wherein the apparatus optionally comprises manoeuvring means configured to move, during the synchronous rotation, the pipet tip in the first direction and/or the fluidic module (10) in the second direction to dip the pipet tip into the fluid opening (12).

6. The apparatus according to any one of claims 1 to 5, wherein the fluidic module (10) comprises several fluid openings (12) oriented in the first direction with respect to the rotation axis (R), wherein the controller (30) is configured to synchronize the rotation of the fluidic module (10) and the rotation of the transfer module (14) to position one of the several fluidic openings (12) and the transfer opening (16) relative to each other to successively allow liquid transfer between the transfer opening (16) and the several fluid openings (12) and/or wherein the transfer module (14) comprises several transfer openings (16), wherein the controller (30) is configured to synchronize the rotation of the fluidic module (10) and the rotation of the transfer module (14) to position the several transfer openings (16) and several fluid openings (12) relative to each other to allow liquid transfer between the transfer openings (16) and several fluid openings (12) of the fluidic module (10).

7. The apparatus according to any one of claims 1 to 6, wherein the radial position of the transfer opening (16) can be adjusted, and/or
wherein the second drive (24) comprises a rotating motor, a robot arm having several axis or a linear axis system.

8. The apparatus according to any one of claims 1 to 7, wherein the controller (30) is configured to control the first or second drive (20, 24) to effect a rotation of one of the fluidic module (10) and the transfer module (14) at a rotation frequency that corresponds to the rotation frequency of the other one of the fluidic module (10) and the transfer module (14).

9. The apparatus according to claim 8, wherein the controller (30) is configured to detect an angular offset between the fluid opening (12) and the transfer opening (16) and to control the rotation of the fluidic module (10) and/or the transfer module (14) to bring the angular offset into a tolerance range, and
wherein the controller (30) is optionally configured to detect the angular offset at a time when one of the fluid opening (12) and the transfer opening (16) is located at a specific position along the respective circular path, based on a difference between an actual position of the other one of the fluid opening (12) and the transfer opening (16) and a target position.

10. A method for transferring liquid between modules (10, 14) rotating around a rotation axis (R), comprising:
effecting (40) a rotation of a fluidic module (10) comprising a fluid opening (12) oriented in a first direction and fluidically connected to fluidic structures in the fluidic module (10) to move the fluid opening (12) along a circular path around the rotation axis (R), wherein the first direction corresponds to a first axial direction with respect to the rotation axis (R) or comprises an angle of < 90° to the first axial direction;
effecting (42) a rotation of a transfer module (14) comprising a transfer opening (16) oriented in a second direction, wherein the second direction corresponds to a second axial direction with respect to the rotation axis (R) that is opposite to the first axial direction or comprises an angle of < 90° to the second axial direction, wherein the transfer module (14) is configured to dispense or receive liquid through the transfer opening (16), to move the transfer opening (16) along a circular path around the rotation axis (R);
synchronizing (44) the rotation of the fluidic module (10) and the rotation of the transfer module (14) to position the fluid opening (12) and the transfer opening (16) relative to each other; and
effecting (46) a liquid transfer between the transfer opening (16) and the fluid opening (12) during the rotations of the fluidic modules (10) and the transfer modules (14).

11. The method according to claim 10, wherein, during the synchronous rotation of the fluidic module (10) and the transfer module (14), the fluid opening (12) and the transfer opening (16) are positioned relative to each other in azimuthal direction with respect to the rotation axis (R) to compensate an offset of the trajectory on the free path between transfer opening (16) and fluid opening (12), and/or the fluid opening (12) and the transfer opening (16) are positioned relative to each other in radial direction with respect to the rotation axis (R) to compensate a centrifugal deflection of the liquid on the free path between transfer opening (16) and fluid opening (12).

12. The method according to claim 10 or 11, wherein the transfer module (14) comprises an electronic pipet with a pipet tip, wherein the transfer opening (16) is formed at the pipet tip and wherein the method comprises moving the pipet tip in the first direction and/or the fluidic module (10) in the second direction during the synchronous rotation to dip the pipet tip into the fluid opening (12).

13. The method according to any one of claims 10 to 12, further comprising adjusting a radial position of the transfer openings (16) to successively effect liquid transfer between the transfer opening (16) and several fluid openings (12) formed in the fluidic module (10) while the rotations of the fluidic module (10) and the transfer module (14) are synchronized with each other.

14. The method according to any one of claims 10 to 13, wherein the rotations of the fluidic module (10) and the rotation of the transfer module (14) are synchronized such that one of several fluid openings (12) of the fluidic module (10) and the transfer opening (16) or one of several transfer openings (16) of the transfer module (14) are positioned relative to each other and liquid transfer between the transfer opening (16) or the transfer openings (16) and several fluid openings (12) is effected successively or simultaneously.

15. The method according to any of claims 11 to 14, wherein synchronizing the rotations comprises:
rotating the fluidic module (10) and rotating the transfer module (14) at the same rotation frequency;
detecting an angular offset between the fluid opening (12) and the transfer opening (16); and
controlling the rotation of the fluidic module (10) and/or the transfer module (14) to bring the angular offset into a tolerance range, and
wherein detecting the angular offset optionally comprises:
detecting that one of the fluid opening (12) and the transfer opening (16) is located at a specific angular position along the respective circular path;
detecting the angular position of the other one of the fluid opening (12) and the transfer opening (16) when the one of the fluid opening (12) and the transfer opening (16) is located at the predetermined angular position;
determining the angular offset based on a difference between the detected angular position of the other one of the fluid opening (12) and the transfer opening (16) and a target position.

## Revendications

1. Dispositif de transfert de liquide entre des modules (10, 14) tournant autour d'un axe de rotation (R), comprenant les caractéristiques suivantes :
un module fluidique (10) comportant un orifice fluidique (12) orienté dans une première direction et relié fluidiquement à des structures fluidiques dans le module fluidique (10), la première direction correspondant à une première direction axiale par rapport à l'axe de rotation (R) ou formant un angle < 90° avec la première direction axiale ;
un module de transfert (14) comportant un orifice de transfert (16) orienté dans une deuxième direction, la deuxième direction correspondant à une deuxième direction axiale par rapport à l'axe de rotation (R), opposée à la première direction axiale, ou formant un angle < 90° avec la deuxième direction axiale, le module de transfert (14) étant configuré pour distribuer ou recevoir du liquide à travers l'orifice de transfert (16) ;
un premier entraînement (20) configuré pour provoquer une rotation du module fluidique (10) de manière à déplacer l'orifice fluidique (12) le long d'une trajectoire circulaire autour de l'axe de rotation (R) ;
un deuxième entraînement (24) configuré pour provoquer une rotation du module de transfert (14) de manière à déplacer l'orifice de transfert (16) le long d'une trajectoire circulaire autour de l'axe de rotation (R) ; et
une unité de commande (30) configurée pour synchroniser la rotation du module fluidique (10) et la rotation du module de transfert (14) afin de positionner l'orifice fluidique (12) et l'orifice de transfert (16) l'un par rapport à l'autre de manière à permettre, pendant les rotations, un transfert de liquide entre l'orifice de transfert (16) et l'orifice fluidique (12).

2. Dispositif selon la revendication 1, dans lequel l'unité de commande (30) est configurée pour commander le module de transfert (14) de manière à distribuer ou recevoir du liquide à travers l'orifice de transfert (16), tandis que la rotation du module fluidique (10) et la rotation du module de transfert (14) sont synchronisées.

3. Dispositif selon la revendication 1 ou 2, dans lequel le module de transfert (14) est configuré pour éjecter du liquide, dans la première direction, depuis l'orifice de transfert (16), de manière continue sous forme de jet ou de manière discontinue sous forme de gouttes.

4. Dispositif selon la revendication 3, dans lequel, pendant la rotation synchrone, l'orifice fluidique (12) et l'orifice de transfert (16) sont positionnés l'un par rapport à l'autre dans une direction azimutale par rapport à l'axe de rotation (R) afin de compenser un décalage de trajectoire sur le trajet libre entre l'orifice de transfert (16) et l'orifice fluidique (12), et/ou
dans lequel, pendant la rotation synchrone, l'orifice fluidique (12) et l'orifice de transfert (16) sont positionnés l'un par rapport à l'autre dans une direction radiale par rapport à l'axe de rotation (R) afin de compenser une déviation du liquide due à l'effet centrifuge sur le trajet libre entre l'orifice de transfert (16) et l'orifice fluidique (12).

5. Dispositif selon la revendication 1 ou 2, dans lequel le module de transfert (14) comporte une pipette électronique munie d'un embout de pipette, l'orifice de transfert (16) étant formé au niveau de l'embout de pipette,
le dispositif comportant, de manière optionnelle, un dispositif de manœuvre configuré pour déplacer, pendant la rotation synchrone, l'embout de pipette dans la première direction et/ou le module fluidique (10) dans la deuxième direction de manière à plonger l'embout de pipette dans l'orifice fluidique (12).

6. Dispositif selon l'une des revendications 1 à 5, dans lequel le module fluidique (10) comporte plusieurs orifices fluidiques (12) orientés dans la première direction par rapport à l'axe de rotation (R), l'unité de commande (30) étant configurée pour synchroniser la rotation du module fluidique (10) et la rotation du module de transfert (14) afin de positionner successivement l'un desdits plusieurs orifices fluidiques (12) et l'orifice de transfert (16) l'un par rapport à l'autre de manière à permettre un transfert de liquide entre l'orifice de transfert (16) et lesdits plusieurs orifices fluidiques (12), et/ou dans lequel le module de transfert (14) comporte plusieurs orifices de transfert (16), l'unité de commande (30) étant configurée pour synchroniser la rotation du module fluidique (10) et la rotation du module de transfert (14) afin de positionner lesdits plusieurs orifices de transfert (16) et plusieurs orifices fluidiques (12) les uns par rapport aux autres de manière à permettre un transfert de liquide entre les orifices de transfert (16) et plusieurs orifices fluidiques (12) du module fluidique (10).

7. Dispositif selon l'une des revendications 1 à 6, dans lequel la position radiale de l'orifice de transfert (16) est réglable, et/ou
dans lequel le deuxième entraînement (24) comporte un moteur de rotation, un bras robotisé à plusieurs axes ou un système à axes linéaires.

8. Dispositif selon l'une des revendications 1 à 7, dans lequel l'unité de commande (30) est configurée pour commander le premier ou le deuxième entraînement (20, 24) de manière à provoquer la rotation de l'un du module fluidique (10) et du module de transfert (14) à une fréquence de rotation correspondant à la fréquence de rotation de l'autre du module fluidique (10) et du module de transfert (14).

9. Dispositif selon la revendication 8, dans lequel l'unité de commande (30) est configurée pour détecter un décalage angulaire entre l'orifice fluidique (12) et l'orifice de transfert (16) et commander la rotation du module fluidique (10) et/ou du module de transfert (14) de manière à amener le décalage angulaire dans une plage de tolérance, et
dans lequel l'unité de commande (30) est configurée, de manière optionnelle, pour détecter le décalage angulaire, à un instant auquel l'orifice fluidique (12) ou l'orifice de transfert (16) se trouve en une position déterminée le long de la trajectoire circulaire respective, sur la base d'une différence entre une position réelle de l'autre parmi l'orifice fluidique (12) et l'orifice de transfert (16) et une position cible.

10. Procédé de transfert de liquide entre des modules (10, 14) tournant autour d'un axe de rotation (R), comprenant les caractéristiques suivantes :
Provoquer (40) une rotation d'un module fluidique (10) comportant un orifice fluidique (12) orienté dans une première direction et relié fluidiquement à des structures fluidiques dans le module fluidique (10), de manière à déplacer l'orifice fluidique (12) le long d'une trajectoire circulaire autour de l'axe de rotation (R), la première direction correspondant à une première direction axiale par rapport à l'axe de rotation (R) ou formant un angle < 90° avec la première direction axiale ;
Provoquer (42) une rotation d'un module de transfert (14) comportant un orifice de transfert (16) orienté dans une deuxième direction, la deuxième direction correspondant à une deuxième direction axiale par rapport à l'axe de rotation (R), opposée à la première direction axiale, ou formant un angle < 90° avec la deuxième direction axiale, le module de transfert (14) étant configuré pour distribuer ou recevoir du liquide à travers l'orifice de transfert (16), de manière à déplacer l'orifice de transfert (16) le long d'une trajectoire circulaire autour de l'axe de rotation (R) ;
Synchroniser (44) la rotation du module fluidique (10) et la rotation du module de transfert (14) afin de positionner l'orifice fluidique (12) et l'orifice de transfert (16) l'un par rapport à l'autre ; et
Provoquer (46) un transfert de liquide entre l'orifice de transfert (16) et l'orifice fluidique (12) pendant les rotations du module fluidique (10) et du module de transfert (14).

11. Procédé selon la revendication 10, dans lequel, pendant la rotation synchrone du module fluidique (10) et du module de transfert (14), l'orifice fluidique (12) et l'orifice de transfert (16) sont positionnés l'un par rapport à l'autre dans une direction azimutale par rapport à l'axe de rotation (R) afin de compenser un décalage de trajectoire sur le trajet libre entre l'orifice de transfert (16) et l'orifice fluidique (12), et/ou l'orifice fluidique (12) et l'orifice de transfert (16) sont positionnés l'un par rapport à l'autre dans une direction radiale par rapport à l'axe de rotation (R) afin de compenser une déviation du liquide due à l'effet centrifuge sur le trajet libre entre l'orifice de transfert (16) et l'orifice fluidique (12).

12. Procédé selon la revendication 10 ou 11, dans lequel le module de transfert (14) comporte une pipette électronique munie d'un embout de pipette, l'orifice de transfert (16) étant formé au niveau de l'embout de pipette, et dans lequel le procédé comprend le déplacement de l'embout de pipette dans la première direction et/ou du module fluidique (10) dans la deuxième direction pendant la rotation synchrone, de manière à plonger l'embout de pipette dans l'orifice fluidique (12).

13. Procédé selon l'une des revendications 10 à 12, comprenant en outre un réglage d'une position radiale des orifices de transfert (16), de manière à provoquer successivement un transfert de liquide entre l'orifice de transfert (16) et plusieurs orifices fluidiques (12) formés dans le module fluidique (10), tandis que les rotations du module fluidique (10) et du module de transfert (14) sont synchronisées l'une avec l'autre.

14. Procédé selon l'une des revendications 10 à 13, dans lequel les rotations du module fluidique (10) et la rotation du module de transfert (14) sont synchronisées de sorte que, respectivement, l'un de plusieurs orifices fluidiques (12) du module fluidique (10) et l'orifice de transfert (16), ou l'un de plusieurs orifices de transfert (16) du module de transfert (14), sont positionnés l'un par rapport à l'autre, et un transfert de liquide est provoqué successivement ou simultanément entre l'orifice de transfert (16) ou les orifices de transfert (16) et lesdits plusieurs orifices fluidiques (12).

15. Procédé selon l'une des revendications 11 à 14, dans lequel la synchronisation des rotations comprend les caractéristiques suivantes :
Rotation du module fluidique (10) et rotation du module de transfert (14) à une même fréquence de rotation ;
Détecter un décalage angulaire entre l'orifice fluidique (12) et l'orifice de transfert (16) ; et
Commander la rotation du module fluidique (10) et/ou du module de transfert (14) de manière à amener le décalage angulaire dans une plage de tolérance ; et
dans lequel la détection du décalage angulaire comprend, de manière optionnelle, les caractéristiques suivantes :
Détecter que l'orifice fluidique (12) ou l'orifice de transfert (16) se trouve à une position angulaire déterminée le long de la trajectoire circulaire respective ;
Détecter la position angulaire de l'autre parmi l'orifice fluidique (12) et l'orifice de transfert (16) lorsque l'orifice fluidique (12) ou l'orifice de transfert (16) se trouve à la position angulaire prédéterminée ;
Déterminer le décalage angulaire sur la base d'une différence entre la position angulaire détectée de l'autre parmi l'orifice fluidique (12) et l'orifice de transfert (16) et une position cible.
